(19) Europäisches Patentamt
European Patent Office
Office européen des brevets

(11) EP 4 750 139 A1

(12) **EUROPEAN PATENT APPLICATION**
published in accordance with Art. 153(4) EPC

(43) Date of publication:
27.05.2026 Bulletin 2026/22

(21) Application number: 24853420.8

(22) Date of filing: 04.07.2024

(51) International Patent Classification (IPC):
H04W 28/02 (2009.01)    H04W 72/0453 (2023.01)
H04L 1/00 (2006.01)

(52) Cooperative Patent Classification (CPC):
H04L 1/00; H04W 4/40; H04W 4/70; H04W 8/22;
H04W 28/02; H04W 72/0453

(86) International application number:
PCT/CN2024/103724

(87) International publication number:
WO 2025/036005 (20.02.2025 Gazette 2025/08)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.08.2023 CN 202311015393

(71) Applicant: HUAWEI TECHNOLOGIES CO., LTD.
Shenzhen 518129 (CN)

(72) Inventors:
• XU, Jiaojiao
  Shenzhen, Guangdong 518129 (CN)
• YI, Feng
  Shenzhen, Guangdong 518129 (CN)
• QI, Hong
  Shenzhen, Guangdong 518129 (CN)
• SU, Hongjia
  Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **COMMUNICATION METHOD AND DEVICE**

(57) This application discloses a communication method and apparatus, and is applicable to fields such as V2X, internet of vehicles, and self-driving. The method includes: A first terminal apparatus receives M1 pieces of sidelink data, where the M1 pieces of sidelink data are located on P1 carriers, sidelink feedback data corresponding to each piece of sidelink data and the corresponding sidelink data are located on a same carrier, and M1 pieces of sidelink feedback data corresponding to the M1 pieces of sidelink data are located in a first time unit; and sends M2 pieces of sidelink feedback data of the M1 pieces of sidelink feedback data in the first time unit, where the M2 pieces of sidelink feedback data are located on P2 carriers, M2 is less than or equal to a quantity of pieces of sidelink feedback data the first terminal apparatus is capable of sending in the first time unit, and P2 is less than or equal to a quantity of carriers on which the first terminal apparatus is capable of sending sidelink feedback data in the first time unit. In this way, the sidelink feedback data is sent based on a capability limitation of the terminal apparatus in a carrier aggregation scenario, to improve sidelink communication efficiency.

FIG. 4

**Description**

CROSS-REFERENCE TO RELATED APPLICATION

This application claims priority to Chinese Patent Application No. 202311015393.9, filed with the China National Intellectual Property Administration on August 11, 2023 and entitled "COMMUNICATION METHOD AND APPARATUS", which is incorporated herein by reference in its entirety.

TECHNICAL FIELD

This application relates to a field of communication technologies, and in particular, to a communication method and apparatus.

BACKGROUND

The 3rd generation partnership project (3rd generation partnership project, 3GPP) defines a sidelink (sidelink, SL) communication technology, and typical application scenarios include vehicle-to-everything (vehicle-to-everything, V2X). To improve reliability of data transmission, in the V2X, a physical sidelink feedback channel (physical sidelink feedback channel, PSFCH) is supported, and a physical layer hybrid automatic repeat request (hybrid automatic repeat request, HARQ)-acknowledgement (acknowledge, ACK) feedback technology is used, to perform feedback for transmitted data.

In addition, carrier aggregation (carrier aggregation, CA) is a technology that integrates intra-band or inter-band radio channel resources, to increase a data transmission rate of a user and reduce latency.

However, when both the PSFCH and the carrier aggregation are introduced in the V2X scenario, how a terminal device performs feedback still needs to be further studied.

SUMMARY

This application provides a communication method and apparatus, to send sidelink feedback data based on a capability limitation of a terminal apparatus in a carrier aggregation scenario, to improve sidelink communication efficiency.

According to a first aspect, this application provides a communication method. The method is applicable to a scenario such as V2X. The method is performed by a terminal apparatus or a module in the terminal apparatus. An example in which the method is performed by a first terminal apparatus is used for description herein. In the method, the first terminal apparatus receives M1 pieces of sidelink data, where the M1 pieces of sidelink data are located on P1 carriers, sidelink feedback data corresponding to each of the M1 pieces of sidelink data and corresponding sidelink data are located on a same carrier, and M1 pieces of sidelink feedback data corresponding to the M1 pieces of sidelink data are located in a first time unit; and sends M2 pieces of sidelink feedback data of the M1 pieces of sidelink feedback data in the first time unit, where the M2 pieces of sidelink feedback data are located on P2 carriers; M2 is less than or equal to a quantity of pieces of sidelink feedback data the first terminal apparatus is capable of sending in the first time unit, P2 is less than or equal to P1, and P2 is less than or equal to a quantity of carriers on which the first terminal apparatus is capable of sending sidelink feedback data in the first time unit; and M1, M2, P1, and P2 are positive integers, and M1 is greater than or equal to M2. According to the foregoing method, in the carrier aggregation scenario, the first terminal apparatus may restrict, based on a capability limitation of the first terminal apparatus (namely, a quantity of pieces of sidelink feedback data the first terminal apparatus is capable of sending in the first time unit and/or a quantity of carriers on which the first terminal apparatus is capable of sending sidelink feedback data in the first time unit), a quantity of pieces of sent sidelink feedback data and/or a quantity of carriers on which the sidelink feedback data is sent, so that the quantity of pieces of sent sidelink feedback data and/or the quantity of carriers on which the sidelink feedback data is sent satisfy/satisfies the capability limitation of the terminal apparatus, to improve sidelink communication efficiency.

It may be understood that, "sidelink data is located on a carrier/in a resource pool" may mean that the sidelink data is carried on a time-frequency resource (for example, a PSSCH/PSCCH resource) in a resource pool corresponding to the carrier, that is, the sidelink data is transmitted on the time-frequency resource in the resource pool corresponding to the carrier. Similarly, "the sidelink data on the carrier" may be the sidelink data carried in the resource pool corresponding to the carrier. "Sidelink feedback data is located on a carrier/in a resource pool" may mean that the sidelink feedback data is carried on a time-frequency resource (for example, a PSFCH resource) in the resource pool corresponding to the carrier, that is, the sidelink feedback data is transmitted on the time-frequency resource in the resource pool corresponding to the carrier. Similarly, "the sidelink feedback data on the carrier" may be the sidelink feedback data carried in the resource pool corresponding to the carrier. For other similar parts, refer to the foregoing descriptions.

In a possible implementation, each piece of sidelink feedback data of the M1 pieces of sidelink data and corresponding sidelink feedback data are located in a same sidelink resource pool on a same carrier.

In a possible implementation, the sending the M2 pieces of sidelink feedback data of the M1 pieces of sidelink feedback data in the first time unit includes: determining P3 carriers from the P1 carriers, where M3 pieces of sidelink feedback data of the M1 pieces of sidelink feedback data are located on the P3 carriers; determining M31 pieces of sidelink feedback data from the M3 pieces of sidelink feedback data; and sending M2 pieces of sidelink feedback data of the M31 pieces of sidelink feedback data in the first time unit, where P3, M3, and M31 are positive integers, P1 is greater than or equal to P3, P3 is greater than or equal to P2, M1 is greater than or equal to M3, M3 is greater than or equal to M31, and M31 is greater than or equal to M2.

In this way, the first terminal apparatus first determines the P3 carriers from the P1 carriers (to satisfy a limitation on the quantity of carriers), then determines the M31 pieces of sidelink feedback data from the M3 pieces of sidelink feedback data on the P3 carriers (to satisfy a limitation on the quantity of pieces of sidelink feedback data), and sends the M2 pieces of sidelink feedback data of the M31 pieces of sidelink feedback data. In the method, specific implementation of performing sidelink feedback under the capability limitation of the first terminal apparatus is clarified, thereby improving the sidelink communication efficiency while satisfying the capability limitation of the terminal apparatus.

In a possible implementation, the determining the P3 carriers from the P1 carriers includes: determining the P3 carriers from the P1 carriers based on a priority of sidelink feedback data on each of the P1 carriers, where the P3 carriers include a part of or all of P31 carriers, the P31 carriers include a carrier on which highest-priority sidelink feedback data of the M1 sidelink feedback data is located, and P31 is a positive integer.

In this way, the carrier is determined based on the priority of the sidelink feedback data on each of the P1 carriers, to satisfy a feedback requirement of sidelink feedback data with a high priority.

In a possible implementation, the P3 carriers are a part of the P31 carriers, and P31 is greater than P3, where a quantity of pieces of highest-priority sidelink feedback data on any one of the P3 carriers is greater than a quantity of pieces of highest-priority sidelink feedback data on any one of the P31 carriers other than the P3 carriers; or when quantities of pieces of highest-priority sidelink feedback data on different carriers of the P31 carriers are the same, a priority of second-highest-priority sidelink feedback data on any one of the P3 carriers is higher than or equal to a priority of second-highest-priority sidelink feedback data on any one of the P31 carriers other than the P3 carriers.

In a possible implementation, the P3 carriers include all of the P31 carriers, and further include a part of or all of P32 carriers, where the P32 carriers are carriers on which highest-priority sidelink feedback data of sidelink feedback data other than sidelink feedback data on the P31 carriers in the M1 pieces of sidelink feedback data is located, and P32 is a positive integer.

In a possible implementation, the determining the P3 carriers from the P1 carriers includes: determining the P3 carriers from the P1 carriers based on a quantity of pieces of sidelink feedback data on each of the P1 carriers, where a quantity of pieces of sidelink feedback data on any one of the P3 carriers is greater than or equal to a quantity of pieces of sidelink feedback data on any one of the P1 carriers other than the P3 carriers.

In this way, the carrier is determined based on the quantity of pieces of sidelink feedback data on each of the P1 carriers, so that a large quantity of pieces of sidelink feedback data are sent.

In a possible implementation, the determining the P3 carriers from the P1 carriers includes: determining the P3 carriers from the P1 carriers based on a quantity of second terminal apparatuses that correspond to sidelink feedback data on each of the P1 carriers, where a quantity of second terminal apparatuses that correspond to sidelink feedback data on any one of the P3 carriers is greater than or equal to a quantity of second terminal apparatuses that correspond to the sidelink feedback data on any one of the P1 carriers other than the P3 carriers, and the sidelink feedback data on each carrier is from the second terminal apparatus corresponding to the sidelink feedback data on the corresponding carrier.

In this way, the carrier is determined based on the quantity of second terminal apparatuses corresponding to the sidelink feedback data on each of the P1 carriers, to serve more terminal apparatuses.

In a possible implementation, the determining the P3 carriers from the P1 carriers includes: determining the P3 carriers from the P1 carriers based on a quantity of pieces of sidelink feedback data that is capable of being sent on each of the P1 carriers in the first time unit, where a quantity of pieces of sidelink feedback data that is capable of being sent on any one of the P3 carriers in the first time unit is greater than or equal to a quantity of pieces of sidelink feedback data that is capable of being sent on any one of the P1 carriers other than the P3 carriers in the first time unit.

In a possible implementation, the determining the P3 carriers from the P1 carriers includes: determining the P3 carriers from the P1 carriers based on a channel busy ratio of each of the P1 carriers, where a channel busy ratio of any one of the P3 carriers is lower than or equal to a channel busy ratio of any one of the P1 carriers other than the P3 carriers.

In this way, the carrier is determined based on the channel busy ratio of each of the P1 carriers, so that the sidelink feedback data is sent on a carrier with a low channel busy ratio as much as possible.

In a possible implementation, the determining the M31 pieces of sidelink feedback data from the M3 pieces of sidelink feedback data includes: determining the M31 pieces of sidelink feedback data from the M3 pieces of sidelink feedback data based on priorities of the M3 pieces of sidelink feedback data, where priorities of the M31 pieces of sidelink feedback data are higher than or equal to a priority of another piece of sidelink feedback data of the M3 pieces of sidelink feedback data other than the M31 pieces of sidelink feedback data.

In this way, the sidelink feedback data is determined based on the priorities of the M3 pieces of sidelink feedback data, to satisfy a feedback requirement of sidelink feedback data with a high priority.

In a possible implementation, the determining the M31 pieces of sidelink feedback data from the M3 pieces of sidelink feedback data includes: determining M31 pieces of sidelink data from M3 pieces of sidelink data based on receiving time of the M3 pieces of sidelink data, where the M31 pieces of sidelink feedback data correspond to the M31 pieces of sidelink data, and receiving time of the M31 pieces of sidelink data is earlier than or equal to receiving time of another piece of sidelink data of the M3 pieces of sidelink data other than the M31 pieces of sidelink data.

In this way, the sidelink feedback data is determined based on the receiving time of the M3 pieces of sidelink data, so that feedback is performed for sidelink data whose receiving time is early as much as possible, to improve communication efficiency.

In a possible implementation, the sending the M2 pieces of sidelink feedback data of the M31 pieces of sidelink feedback data includes: if a sum of preset transmit powers of the M31 pieces of sidelink feedback data is less than or equal to a maximum transmit power of sidelink feedback data that is supported by the first terminal apparatus, sending the M31 pieces of sidelink feedback data, where M31 is equal to M2; or if a sum of preset transmit powers of the M31 pieces of sidelink feedback data is greater than a maximum transmit power of sidelink feedback data that is supported by the first terminal apparatus, sending the M2 pieces of sidelink feedback data of the M31 pieces of sidelink feedback data, where M31 is greater than M2, where a preset transmit power of each of the M31 pieces of sidelink feedback data is a preset transmit power corresponding to a carrier on which corresponding sidelink feedback data is located.

In a possible implementation, the M31 pieces of sidelink feedback data are located on P21 carriers, P21 is a positive integer, P3 is greater than or equal to P21, and P21 is greater than or equal to P2; a preset transmit power corresponding to each of the P21 carriers is a first power corresponding to a corresponding carrier; or a preset transmit power corresponding to each of the P21 carriers is a maximum value, a minimum value, an average value, or a median value of first powers corresponding to the P21 carriers.

In a possible implementation, M3 is greater than or equal to the quantity of pieces of sidelink feedback data the first terminal apparatus is capable of sending in the first time unit.

In a possible implementation, the sending the M2 pieces of sidelink feedback data of the M1 pieces of sidelink feedback data in the first time unit includes: determining M4 pieces of sidelink feedback data from the M1 pieces of sidelink feedback data, where the M4 pieces of sidelink feedback data are located on P4 carriers; determining P5 carriers from the P4 carriers, where M41 pieces of sidelink feedback data of the M4 pieces of sidelink feedback data are located on the P5 carriers; and sending M2 pieces of sidelink feedback data of the M41 pieces of sidelink feedback data in the first time unit, where M4, M41, P4, and P5 are positive integers, P4 is greater than or equal to P5, M4 is greater than or equal to M41, and M41 is greater than or equal to M2.

In this way, the first terminal apparatus first determines the M4 pieces of sidelink feedback data from the M1 pieces of sidelink feedback data (to satisfy a limitation on the quantity of pieces of sidelink feedback data), then determines the P5 carriers from the P4 carriers (to satisfy a limitation on the quantity of carriers), and further sends the M2 pieces of sidelink feedback data of the M41 pieces of sidelink feedback data. In the method, specific implementation of performing sidelink feedback under the capability limitation of the first terminal apparatus is clarified, thereby improving the sidelink communication efficiency while satisfying the capability limitation of the terminal apparatus.

In a possible implementation, the determining the M4 pieces of sidelink feedback data from the M1 pieces of sidelink feedback data includes: determining the M4 pieces of sidelink feedback data from the M1 pieces of sidelink feedback data based on priorities of the M1 pieces of sidelink feedback data, where priorities of the M4 pieces of sidelink feedback data are higher than or equal to a priority of another piece of sidelink feedback data of the M1 pieces of sidelink feedback data other than the M4 pieces of sidelink feedback data.

In a possible implementation, the determining the M4 pieces of sidelink feedback data from the M1 pieces of sidelink feedback data includes: determining M4 pieces of sidelink data from M1 pieces of sidelink data based on receiving time of the M1 pieces of sidelink data, where the M4 pieces of sidelink feedback data correspond to the M4 pieces of sidelink data, and receiving time of the M4 pieces of sidelink data is earlier than or equal to receiving time of another piece of sidelink data of the M1 pieces of sidelink data other than the M4 pieces of sidelink data.

In a possible implementation, the determining the P5 carriers from the P4 carriers includes: determining the P5 carriers from the P4 carriers based on a priority of sidelink feedback data on each of the P4 carriers, where the P5 carriers include a part of or all of P41 carriers, the P41 carriers include a carrier on which highest-priority sidelink feedback data of the sidelink feedback data on the P4 carriers is located, and P41 is a positive integer.

In a possible implementation, the P5 carriers are a part of the P41 carriers, and P41 is greater than P5, where a quantity of pieces of highest-priority sidelink feedback data on any one of the P5 carriers is greater than a quantity of pieces of highest-priority sidelink feedback data on any one of the P41 carriers other than the P5 carriers; or when quantities of pieces of highest-priority sidelink feedback data on different carriers of the P41 carriers are the same, a priority of second-highest-priority sidelink feedback data on any one of the P5 carriers is higher than or equal to a priority of second-highest-priority sidelink feedback data on any one of the P41 carriers other than the P5 carriers.

In a possible implementation, the P5 carriers include all of the P41 carriers, and further include a part of or all of P42 carriers, where the P42 carriers are carriers on which highest-priority sidelink feedback data of sidelink feedback data other than sidelink feedback data on the P41 carriers in the M4 pieces of sidelink feedback data is located, and P42 is a positive integer.

In a possible implementation, the determining the P5 carriers from the P4 carriers includes: determining the P5 carriers from the P4 carriers based on a quantity of pieces of sidelink feedback data that is on each of the P4 carriers and that is of the M4 pieces of sidelink feedback data, where a quantity of pieces of sidelink feedback data that is on any one of the P5 carriers and that is of the M4 pieces of sidelink feedback data is greater than or equal to a quantity of pieces of sidelink feedback data that is on any one of the P4 carriers other than the P5 carriers and that is of the M4 pieces of sidelink feedback data.

In a possible implementation, the determining the P5 carriers from the P4 carriers includes: determining the P5 carriers from the P4 carriers based on a channel busy ratio of each of the P4 carriers, where a channel busy ratio of any one of the P5 carriers is lower than or equal to a channel busy ratio of any one of the P4 carriers other than the P5 carriers.

In a possible implementation, the sending the M2 pieces of sidelink feedback data of the M41 pieces of sidelink feedback data includes: if a sum of preset transmit powers of the M41 pieces of sidelink feedback data is less than or equal to a maximum transmit power of sidelink feedback data that is supported by the first terminal apparatus, sending the M41 pieces of sidelink feedback data, where M41 is equal to M2; or if a sum of preset transmit powers of the M41 pieces of sidelink feedback data is greater than a maximum transmit power of sidelink feedback data that is supported by the first terminal apparatus, sending the M2 pieces of sidelink feedback data of the M41 pieces of sidelink feedback data, where M41 is greater than M2, where a preset transmit power of each of the M41 pieces of sidelink feedback data is a preset transmit power corresponding to a carrier on which corresponding sidelink feedback data is located.

In a possible implementation, the M41 pieces of sidelink feedback data are located on P22 carriers, P22 is a positive integer, P5 is greater than or equal to P22, and P22 is greater than or equal to P2; a preset transmit power corresponding to each of the P22 carriers is a first power corresponding to a corresponding carrier; or a preset transmit power corresponding to each of the P22 carriers is a maximum value, a minimum value, an average value, or a median value of first powers corresponding to the P22 carriers.

In a possible implementation, P4 is greater than or equal to the quantity of carriers on which the first terminal apparatus is capable of sending the sidelink feedback data in the first time unit.

In a possible implementation, all the P1 carriers are secondary carriers of the first terminal apparatus.

In a possible implementation, the P1 carriers include a primary carrier and a secondary carrier of the first terminal apparatus; and the P2 carriers are primary carriers in the P1 carriers, or the P2 carriers include a primary carrier and at least one secondary carrier in the P1 carriers.

According to a second aspect, this application provides a communication apparatus. The communication apparatus can implement a function in the first aspect. For example, the communication apparatus includes a corresponding module, unit, or means for performing an operation in the first aspect. The function, unit, or means may be implemented by software, or implemented by hardware, or implemented by hardware executing corresponding software.

In a possible design, the communication apparatus includes a processing unit and a communication unit. The communication unit may be configured to receive a signal and send a signal, to implement communication between the communication apparatus and another apparatus. For example, the communication unit is configured to send system information to a terminal. The processing unit may be configured to perform some internal operations of the communication apparatus. Functions performed by the processing unit and the communication unit may correspond to the operations in the first aspect.

In a possible design, the communication apparatus includes a processor, and the processor may be configured to be coupled to a memory. The memory may store a necessary computer program or necessary instructions for implementing the functions in the first aspect. The processor may execute the computer program or the instructions stored in the memory. When the computer program or the instructions are executed, the communication apparatus is caused to implement the method according to any one of the possible designs or implementations of the first aspect.

In a possible design, the communication apparatus includes a processor and a memory. The memory may store a necessary computer program or necessary instructions for implementing the functions in the first aspect. The processor may execute the computer program or the instructions stored in the memory. When the computer program or the instructions are executed, the communication apparatus is caused to implement the method according to any one of the possible designs or implementations of the first aspect.

In a possible design, the communication apparatus includes a processor and an interface circuit. The processor is configured to: communicate with another apparatus through the interface circuit, and perform the method according to any one of the possible designs or implementations of the first aspect.

It may be understood that, in the second aspect, the processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be separately disposed on different chips. A type of the memory and a manner in which the memory and the processor are disposed are not limited in embodiments of this application.

According to a third aspect, this application provides a computer-readable storage medium. The computer storage medium stores computer-readable instructions. When a computer reads and executes the computer-readable instructions, the computer is caused to perform the method according to any one of the possible designs of the first aspect.

For example, the computer-readable storage medium may be any usable medium that can be accessed by the computer. By way of example but not limitation, the computer-readable medium may include a non-transitory computer-readable medium, a random-access memory (random-access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a fourth aspect, this application provides a computer program product. When a computer reads and executes the computer program product, the computer is caused to perform the method according to any one of the possible designs of the first aspect.

According to a fifth aspect, this application provides a chip (or a chip system). The chip includes a processor. The processor is coupled to a memory, and is configured to read and execute a software program stored in the memory, to implement the method according to any one of the possible designs of the first aspect.

BRIEF DESCRIPTION OF DRAWINGS

FIG. 1A, FIG. 1B, and FIG. 1C are diagrams of a communication system according to an embodiment of this application;
FIG. 2A is a diagram of a time domain resource in a resource pool according to an embodiment of this application;
FIG. 2B is a diagram of a frequency domain resource in a resource pool according to an embodiment of this application;
FIG. 2C is a diagram of a PSFCH configuration period according to an embodiment of this application;
FIG. 2D is a diagram of a PSFCH resource according to an embodiment of this application;
FIG. 2E is a diagram of a time interval of PSSCH feedback according to an embodiment of this application;
FIG. 2F is a diagram of a correspondence between a PSSCH resource and a PSFCH resource according to an embodiment of this application;
FIG. 3 is a diagram of sidelink feedback data that needs to be sent by a terminal apparatus in a carrier aggregation scenario according to an embodiment of this application;
FIG. 4 is a schematic flowchart corresponding to a communication method according to an embodiment of this application;
FIG. 5 is another schematic flowchart corresponding to a communication method according to an embodiment of this application;
FIG. 6 is another schematic flowchart corresponding to a communication method according to an embodiment of this application;
FIG. 7 is another schematic flowchart corresponding to a communication method according to an embodiment of this application;
FIG. 8 is another schematic flowchart corresponding to a communication method according to an embodiment of this application;
FIG. 9 is a possible example block diagram of an apparatus according to an embodiment of this application;
FIG. 10 is a diagram of a structure of a communication apparatus according to an embodiment of this application; and
FIG. 11 is a diagram of a structure of another communication apparatus according to an embodiment of this application.

DESCRIPTION OF EMBODIMENTS

The following describes the technical solutions in embodiments of this application with reference to accompanying drawings in embodiments of this application. The technical solutions in embodiments of this application may be applied to various communication systems, such as a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, such as a long term evolution (long term evolution, LTE) system, a 5th generation (5th generation, 5G) mobile communication system, such as a new radio (new radio, NR) system, and a future evolved communication system, such as a 6th generation (6th generation, 6G) mobile communication system.

Particularly, the technical solutions in embodiments of this application may be further applied to fields such as vehicle-to-everything (vehicle-to-everything, V2X) communication, cellular vehicle-to-everything (cellular vehicle-to-everything, C-V2X) communication, internet of vehicles, self-driving, and assisted driving. The C-V2X is a V2X communication technology developed based on a cellular system. The C-V2X uses and enhances a current cellular network function and element, to implement low-latency and high-reliability communication between various nodes in a vehicle network, including vehicle-to-vehicle (vehicle-to-vehicle, V2V) communication, vehicle-to-pedestrian (vehicle-to-pedestrian, V2P) communication, vehicle-to-infrastructure (vehicle-to-infrastructure, V2I) communication, and vehicle-to-network (vehicle-to-network, V2N) communication. With evolution of the cellular system from 4G LTE to 5G NR, the C-V2X also evolves from LTE-V2X to NR-V2X.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be further used. In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the term "example" is used to present a concept in a specific manner.

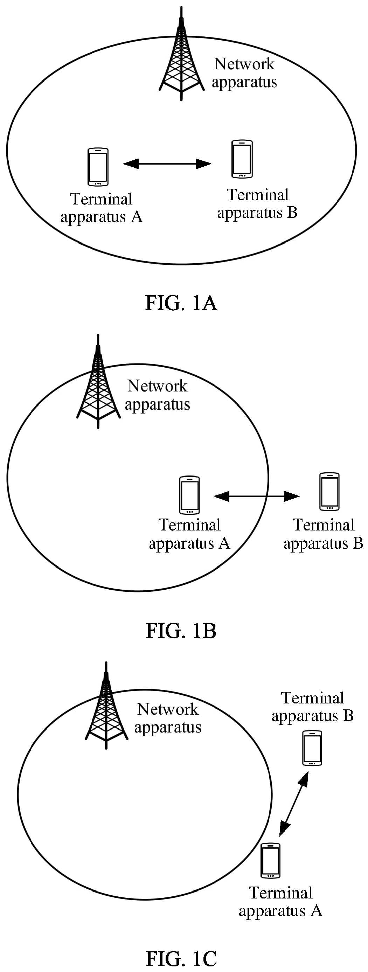

For ease of understanding embodiments of this application, a communication system shown in FIG. 1A to FIG. 1C is first used as an example to describe in detail a communication system applicable to embodiments of this application. This application is applicable to a communication system that supports sidelink communication, and supports a communication scenario with network coverage and a communication scenario without the network coverage. A sidelink may also be referred to as a sidelink, and is referred to as a sidelink in this application.

As shown in FIG. 1A to FIG. 1C, the communication system may include a plurality of terminal apparatuses (for example, a terminal apparatus A and a terminal apparatus B), and optionally, may further include a network apparatus. In FIG. 1A, both the terminal apparatus A and the terminal apparatus B are in a signal coverage of the network apparatus. In FIG. 1B, the terminal apparatus A is in a signal coverage of the network apparatus, but the terminal apparatus B is outside the signal coverage of the network apparatus. In FIG. 1C, both the terminal apparatus A and the terminal apparatus B are outside signal coverage of the network apparatus. The terminal apparatus A and the terminal apparatus B in FIG. 1A and FIG. 1B may communicate with each other through the sidelink and based on a resource scheduled by the network apparatus. The resource may be a licensed resource or a licensed band. Alternatively, for the terminal apparatus A and the terminal apparatus B, a terminal apparatus may autonomously perform resource self-selection, that is, select a resource used for sidelink communication from a resource pool, where the resource is an unlicensed resource or an unlicensed band. Both the terminal apparatus A and the terminal apparatus B in FIG. 1C are outside the signal coverage of the network apparatus. Therefore, communication can be performed only through the sidelink and in a manner of resource self-selection.

The following separately describes the network apparatus and the terminal apparatus in FIG. 1A to FIG. 1C.

(1) Network apparatus

In embodiments of this application, the network apparatus may also be referred to as a network device, and the network apparatus may be a device in a wireless network. For example, the network apparatus may be a radio access network (radio access network, RAN) node that connects a terminal device to the wireless network, and may also be referred to as an access network device. The network apparatus includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network apparatus may be a network apparatus in a 5G mobile communication system, for example, a next generation NodeB (next generation NodeB, gNB), a transmission reception point (transmission reception point, TRP), or a TP in an NR system; or one or one group of antenna panels (including a plurality of antenna panels) of a base station in a 5G mobile communication system. Alternatively, the network apparatus may be a network node that forms a gNB or a transmission point, for example, a BBU or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU. It may be understood that, the network apparatus may be a device including one or more of a CU node, a DU node, and an AAU node. In addition, the CU may be classified as a network device in the RAN, or the CU may be classified as a network apparatus in a core network (core network, CN). This is not limited in this application.

(2) Terminal apparatus

The terminal apparatus in embodiments of this application may be a wireless terminal apparatus that can receive scheduling and indication information from the network apparatus. The terminal apparatus may be a terminal device, or may be user equipment (user equipment, UE), a mobile station (mobile station, MS), a mobile terminal (mobile terminal, MT), or the like. The terminal apparatus may be a device that includes a wireless communication function (providing voice/data connectivity for a user), for example, a handheld device, a vehicle-mounted device, or a vehicle-mounted module that has a wireless connection function. Currently, some examples of the terminal apparatus are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in internet of vehicles, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) communication terminal apparatus, a vehicle-to-everything (vehicle-to-everything, V2X) communication terminal apparatus, a smart vehicle, an in-car infotainment system (or referred to as a vehicle-mounted sending unit) (telematics box, T-box), a machine-to-machine/machine-type communication (machine-to-machine/machine-type communication, M2M/MTC) terminal apparatus, and an internet of things (internet of things, IoT) terminal apparatus. For example, the terminal apparatus may be a vehicle-mounted device, an entire vehicle device, a vehicle-mounted module, a vehicle, an on board unit (on board unit, OBU), a roadside unit (roadside unit, RSU), a T-box, a chip, or a system-on-chip (system-on-chip, SoC). The chip or the SoC may be mounted in the vehicle, the OBU, the RSU, or the T-box. The wireless terminal in industrial control may be a camera, a robot, or the like. The wireless terminal in the smart home may be a television, an air conditioner, a sweeper, a speaker, a set-top box, or the like. The terminal device may alternatively be a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road side unit, RSU). The terminal device may alternatively be a device in device-to-device (device-to-device, D2D) communication, for example, an electricity meter or a water meter. In addition, the terminal device in embodiments of this application may alternatively be a terminal device in an IoT system. An IoT is an important part of future development of information technologies. A main technical feature of the IoT is connecting a thing to a network through a communication technology, to implement an intelligent network for interconnection between a person and a machine or between one thing and another.

In this application, predefined content is usually defined in a standard, does not need to be configured by another device, and is information recorded/written in advance in hardware and/or software of the terminal apparatus, or may be understood as information that cannot be changed by the network apparatus or another terminal apparatus. Pre-configured content is usually information recorded/written in advance in hardware and/or software of the terminal apparatus, is determined by a factory device vendor, and may be changed by software or hardware.

A (pre-) configuration may be classified into a network apparatus (pre-) configuration and a terminal apparatus (pre-) configuration. If a (pre-) configuration is a network apparatus (pre-) configuration, the (pre-) configuration may be performed based on a system information block (system information block, SIB) or RRC signaling. If a (pre-) configuration is a terminal apparatus (pre-) configuration, the (pre-) configuration may be performed based on PC5-RRC signaling.

The communication system and a scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new scenarios, the technical solutions provided in embodiments of this application are also applicable to similar technical problems.

The following first explains and describes related terms in embodiments of this application. Unless otherwise specified, these explanations are intended to support meanings of related terms, so that embodiments of this application are easier to understand, and should not be considered as a strict limitation on related terms in the protection scope claimed in this application.

(1) Sidelink communication

A time-frequency resource for sidelink communication is configured through a sidelink resource pool, and the sidelink resource pool may also be referred to as a resource pool for short. The resource pool may be considered as a set of time domain resources and frequency domain resources used for sidelink communication. The resource pool may be located on a carrier, or may be located on a bandwidth part (bandwidth part, BWP) of a carrier. For example, one or more resource pools may be configured for one carrier (or a BWP of one carrier).

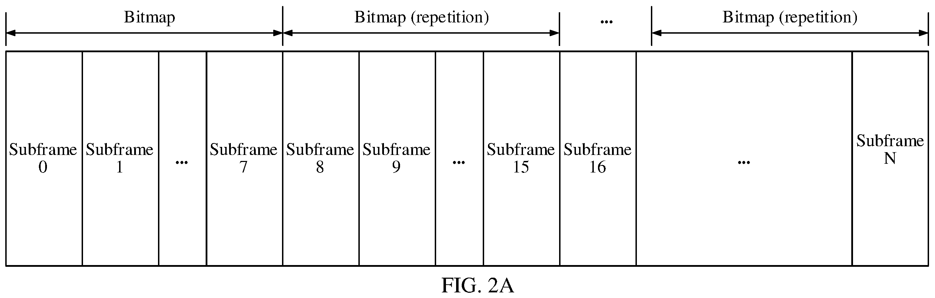

For the time domain resource for sidelink communication, a network apparatus uses a bitmap (bitmap) and periodically repeats the bitmap to indicate all subframes in a system, to indicate a time domain resource set of a subframe used for sidelink communication. As shown in FIG. 2A, an example (a length of a bitmap is 8 bits) is provided. Sidelink transmission occupies a specific quantity of slots (slots) in each subframe, each slot includes M=14 symbols, and the M symbols are one time domain transmission unit. Scheduling of a sidelink communication resource may be performed at a granularity of a slot in time domain.

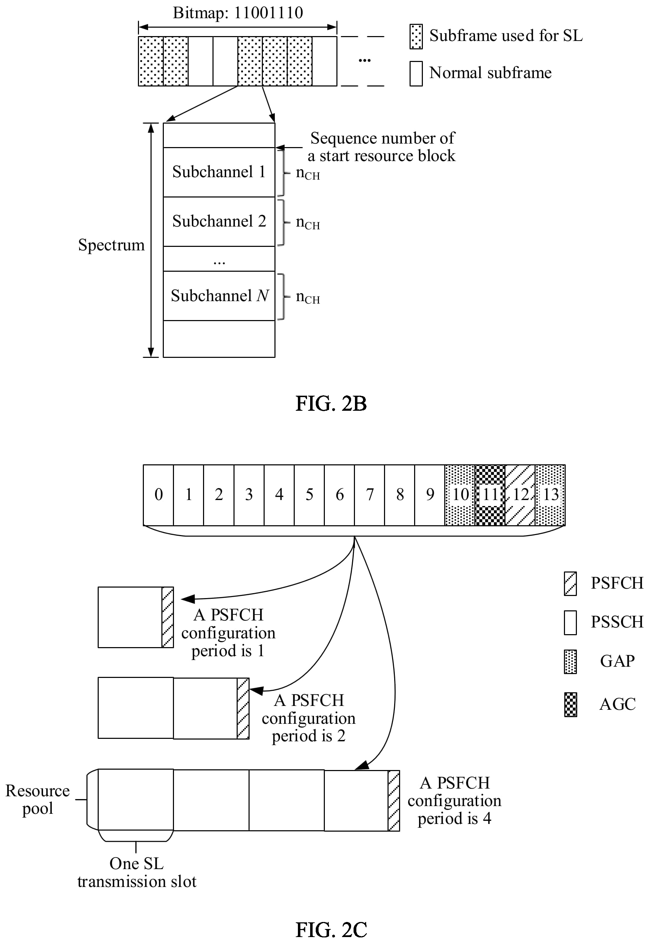

For the frequency domain resource for sidelink communication, a network apparatus divides a band used for sidelink communication into several subchannels, and each subchannel includes a specific quantity of resource blocks (resource blocks, RBs). FIG. 2B is a diagram of a frequency domain resource of a resource pool. The network apparatus indicates a sequence number of a $1^{st}$ resource block of the frequency domain resource used for sidelink communication, a total quantity $N$ of subchannels included in the resource pool, and a quantity $n_{CH}$ of RBs included in each subchannel. One sidelink transmission may occupy one or more subchannels. Scheduling of a sidelink communication resource is performed at a granularity of a subchannel in frequency domain.

In addition, in sidelink communication, a terminal apparatus may perform transmission of sidelink data through a physical sidelink shared channel (physical sidelink shared channel, PSSCH) or a physical sidelink control channel (physical sidelink control channel, PSCCH). A meaning of the sidelink data is not limited in this application.

(2) Carrier aggregation

Carrier aggregation is a technology that integrates intra-band or inter-band radio channel resources, to increase a data transmission rate of a user and reduce latency. To provide a higher service rate, the carrier aggregation is introduced in 3GPP Release 10. A plurality of contiguous or non-contiguous carriers (component carriers, CCs) are aggregated into a larger bandwidth (a maximum of 100 MHz), to satisfy a requirement of 3GPP. Based on a band of the aggregated carriers, the CA may be classified into intra-band carrier aggregation (intra-band CA) and inter-band carrier aggregation (inter-band CA). The intra-band carrier aggregation is further classified into two scenarios: intra-band contiguous carrier aggregation and intra-band non-contiguous carrier aggregation.

For sidelink communication, the carrier aggregation technology is supported in an LTE-V2X phase. For example, the network apparatus may configure one or more resource pools for each of three carriers, and indicate that the three carriers can be aggregated. In this way, the terminal apparatus may simultaneously receive sidelink data from one or more other terminal apparatuses on the three carriers or fewer than three carriers, or may simultaneously send sidelink data to one or more other terminal apparatuses on the three carriers or fewer than three carriers.

(3) HARQ-ACK feedback

HARQ-ACK feedback means that after a transmit end sends data to a receive end, the receive end may send corresponding feedback information, for example, ACK/negative acknowledgement (negative acknowledgement, NACK) information, to the transmit end based on a decoding result of the data, to improve reliability of data transmission.

For sidelink communication, the HARQ-ACK feedback is supported in an NR-V2X phase. That is, for one PSCCH/PSSCH transmission (a PSSCH is used as an example herein), the receive end needs to transmit/send corresponding sidelink feedback data based on a decoding result of sidelink data obtained this time. In embodiments of this application, the sidelink feedback data may also be referred to as sidelink feedback information. The sidelink feedback data may include at least one of HARQ-ACK information (for example, ACK/NACK information), conflict information (for example, a scheme 2 conflict indication), a channel state information reference signal (channel state information reference signal, CSI-RS) report, and a beam indication. Specific content included in the sidelink feedback data is not limited in embodiments of this application.

The sidelink feedback data may be transmitted through a physical sidelink feedback channel (physical sidelink feedback channel, PSFCH). A PSFCH resource is a periodic resource configured in a resource pool, and a period configuration parameter $N_{PSSCH}^{PSFCH}$ (namely, a PSFCH configuration period) of the PSFCH resource may be 0, 1, 2, or 4. $N_{PSSCH}^{PSFCH} = 0$ represents that there is no PSFCH resource configuration in the resource pool, that is, PSFCH sending is not enabled in the resource, that is, feedback of a physical layer HARQ is not supported; and $N_{PSSCH}^{PSFCH} = 1, 2, 4$ represents that there is one feedback slot in every $N_{PSSCH}^{PSFCH}$ sidelink transmission slots in one time window, and the feedback slot is a slot in which the PSFCH resource is located. As shown in FIG. 2C, in the feedback slot, the PSFCH occupies the last three symbols including a gap (GAP), and is specifically: automatic gain control (automatic gain control, AGC)+PSFCH+GAP.

In a V2X transmission mode 2 (mode 2) scenario, different from scheduling by a network apparatus, a terminal apparatus needs to autonomously select a PSSCH sending resource based on a listening result of the terminal apparatus. Therefore, to simplify a PSFCH resource selection process, the PSFCH resource is configured for each PSSCH subchannel in the NR-V2X. A process of determining the PSFCH resource corresponding to each subchannel is as follows:

① A bitmap (bitmap) of a PSFCH frequency domain resource is configured for the resource pool, to indicate whether a physical resource block (physical resource block, PRB) of a frequency domain resource in which the resource pool is located can be used as the PSFCH frequency domain resource. That is, a length of bit information included in the bitmap is equal to a quantity of PRBs in the resource pool. 1 in the bitmap represents that a corresponding PRB can be used as the PSFCH frequency domain resource, and 0 in the bitmap represents that a corresponding PRB cannot be used as the PSFCH frequency domain resource. Particularly, the PSFCH frequency domain resource may be used for transmission of the HARQ-ACK information, and the resource is represented by a "sl-PSFCH-RB-Set" bitmap. A bit value of 1 in the bitmap indicates that a corresponding PRB may be used for transmission of the HAQR-ACK information. Alternatively, the PSFCH frequency domain resource may be used for transmission of a scheme 2 conflict indication, and the resource is represented by a "sl-RB-SetPSFCH" bitmap. A bit value of 1 in the bitmap indicates that a corresponding PRB may be used for transmission of the scheme 2 conflict indication. A position of the bit value of 1 in "sl-PSFCH-RB-Set" and a position of the bit value of 1 in "sl-RB-SetPSFCH" do not overlap.

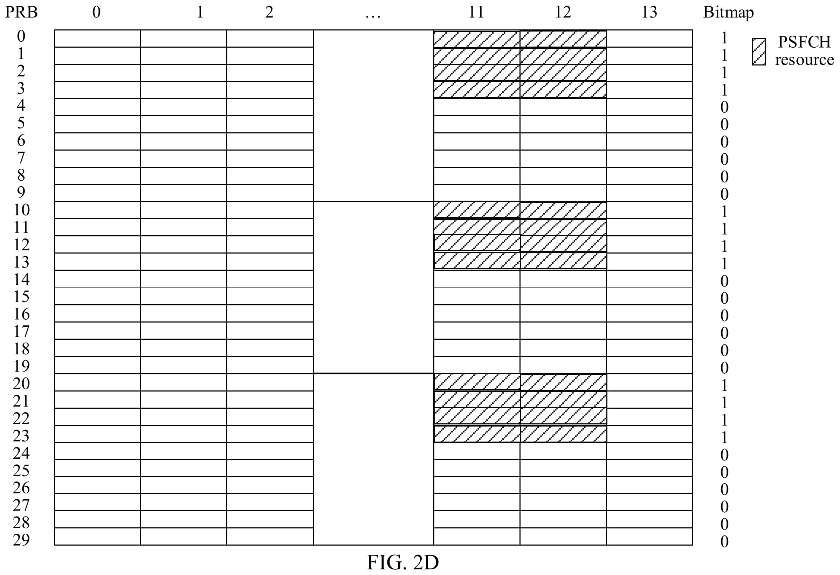

As shown in FIG. 2D, in a feedback slot having the PSFCH frequency domain resource, assuming that one subchannel includes 10 PRBs, and the resource pool includes three subchannels in total, a bitmap indicating the PSFCH frequency domain resource in the resource pool includes 3*10=30 bits in total, to separately indicate whether each PRB can be used for PSFCH transmission. Referring to FIG. 2D, a frequency domain position corresponding to the bit value of 1 in the bitmap may be used for PSFCH transmission, for example, the HARQ-ACK information or the conflict information. FIG. 2D is illustrated by using an example in which the first four PRBs of each subchannel may be used for PSFCH transmission.

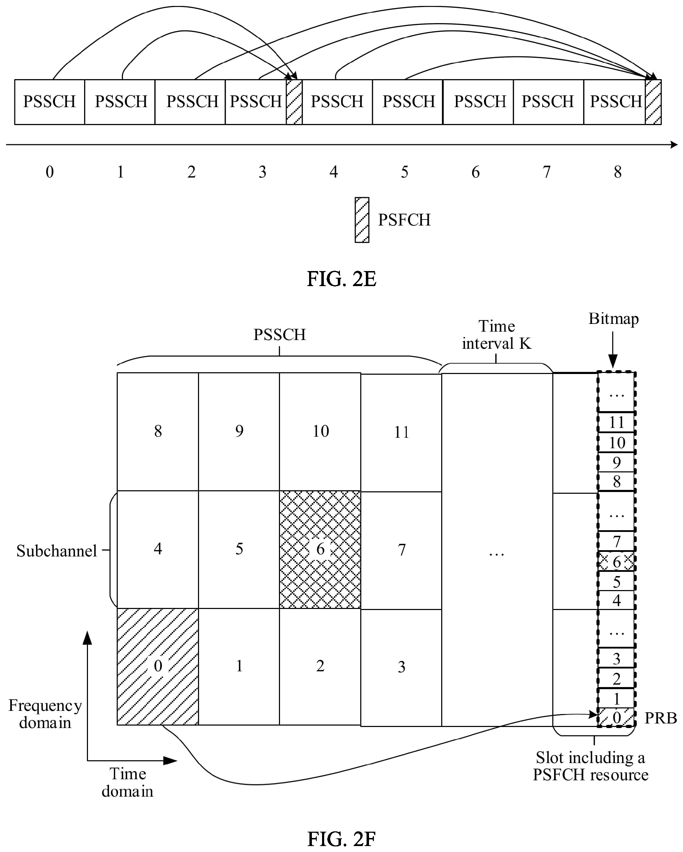

② Considering a limitation of a decoding capability of the receive end, the receive end cannot immediately perform feedback after receiving the sidelink data. Therefore, a PSSCH feedback time interval $K$ is defined in the standard. To be specific, the PSFCH is transmitted through the PSSCH in a 1st available slot including the PSFCH resource. The slot and a slot in which the PSSCH is located are at least spaced by $K$ slots, and a value of $K$ is configured by the resource pool. As shown in FIG. 2E, when $K = 2$, a PSSCH carried in a slot 0 and a PSSCH carried in a slot 1 may be fed back on a PSFCH resource in a slot 3, and a PSSCH carried in a slot 2/3/4/5 may be fed back on a PSFCH resource in a slot 7. Because the PSSCH carried in the slot 2/3/4/5 is fed back on a PSFCH resource in a same slot, a time domain length of the PSSCH that occupies a plurality of slots may be referred to as a PSSCH bundling window length or a PSSCH feedback period.

③ An available PSFCH resource in one feedback slot is sequentially allocated to each subchannel in a feedback period in a manner of time domain first and then frequency domain. For example, when $N_{PSSCH}^{PSFCH} = 4$, a PSFCH resource corresponding to each subchannel in four bundled PSSCH slots is shown in FIG. 2F. If the PSSCH occupies two subchannels for transmission, for example, the PSSCH resource occupies 5 and 9, a PSFCH resource corresponding to the PSSCH resource also occupies 5 and 9 respectively, and the PSFCH resource is inconsecutive in frequency domain.

In other words, in the NR-V2X, a correspondence between the PSSCH resource (carrying sidelink data) and the PSFCH resource (carrying sidelink feedback data) is defined in the resource pool. The PSSCH resource and the corresponding PSFCH resource are located in a same resource pool, or the sidelink data and sidelink feedback data corresponding to the sidelink data are located in a same resource pool.

(4) PSFCH power control

After a feedback mechanism such as HARQ-ACK is introduced in NR-V2X, a PSFCH power control solution is further provided.

It is assumed that a terminal apparatus (namely, a receive end of sidelink data) has $N_{sch,Tx,PSFCH}$ scheduled PSFCH transmissions (namely, a quantity of pieces of sidelink feedback data) in all resource pools of an active BWP b of a carrier f, and a maximum quantity of pieces of sidelink feedback data the terminal apparatus is capable of sending simultaneously is $N_{max,PSFCH}$. A quantity of pieces of sidelink feedback data that is determined by the terminal apparatus is $N_{Tx,PSFCH}$. The following separately describes specific implementation of PSFCH power control when dl-PO-PSFCH is configured and when dl-PO-PSFCH is not configured.

(4.1) dl-PO-PSFCH is configured.

It is assumed that dl-PO-PSFCH is configured, and a power (or referred to as a first power) $P_{PSFCH,one}$ of a PSFCH transmission satisfies the following formula:

$$P_{\mathrm{PSFCH,one}} = P_{O,PSFCH} + 10\, log_{10}(2^{\mu}) + \alpha_{PSFCH} \cdot PL \ [\mathrm{dBm}]$$

$P_{O,PSFCH}$ is a transmit power value, and is a value configured by dl-P0-PSFCH-r16 or dl-P0-PSFCH-r17; $\alpha_{PSFCH}$ is a value configured by dl-Alpha-PSFCH, or otherwise, $\alpha_{PFSCH} = 1$; and $PL = PL_{b,f,c}$ is a path loss of an active BWP b of a carrier f in a serving cell c, and is related to the carrier f.

A1:

$$N_{\mathrm{sch,Tx,PSFCH}} \leq N_{\mathrm{max,PSFCH}}$$

If $P_{PSFCH,one}$ + $10log_{10}(N_{sch,Tx,PSFCH}) \leq P_{CMAX}$, where $P_{CMAX}$ is a maximum transmit power of a PSFCH transmission supported by a terminal apparatus (for details, refer to the definition of TS 38.101-1 8-1),

$$N_{\mathrm{Tx,PSFCH}} = N_{\mathrm{sch,Tx,PSFCH}}$$

$$P_{\mathrm{PSFCH,k}}(i) = P_{\mathrm{PSFCH,one}} \ [\mathrm{dBm}].$$

$P_{PSFCH,k}(i)$ represents a transmit power of a $k^{th}$ piece of sidelink feedback data, where $1 \leq k \leq N_{Tx,PSFCH}$, and $i$ is a priority (for example, a priority defined in TS 38.213 16.2.4.2) of the $k^{th}$ piece of sidelink feedback data (or indicated by sidelink data corresponding to the $k^{th}$ piece of sidelink feedback data).

Otherwise, the terminal apparatus autonomously determines the $N_{Tx,PSFCH}$ pieces of sidelink feedback data from the $N_{sch,Tx,PSFCH}$ pieces of sidelink feedback data. $N_{\mathrm{Tx,PSFCH}} \geq \mathbf{max}\left(1, \sum_{i=1}^{K} M_i\right)$, where K is defined as a maximum value that satisfies $P_{\mathrm{PSFCH,one}} + 10log_{10}\left(\mathbf{max}\left(1, \sum_{i=1}^{K} M_i\right)\right) \leq P_{\mathrm{CMAX}}$; or otherwise, K=0. Mi: For $1 \leq i \leq 8$, Mi is a quantity of PSFCHs with a priority of i and having HARQ-ACK information, and for i>8, Mi is a quantity of PSFCHs with a priority value of i-8 and having conflict information.

In this case, the transmit power $P_{PSFCH,k}(i)$ of the $k^{th}$ piece of sidelink feedback data of the $N_{Tx,PSFCH}$ pieces of sidelink feedback data is as follows:

$$P_{\mathrm{PSFCH,k}}(i) = min\left(P_{\mathrm{CMAX}} - 10log_{10}(N_{\mathrm{Tx,PSFCH}}), P_{\mathrm{PSFCH,one}}\right) \ [\mathrm{dBm}]$$

In conclusion, in a case of $N_{sch,Tx,PSFCH} \leq N_{max,PSFCH}$, if $P_{PSFCH,one}$ + $10log_{10}(N_{sch,Tx,PSFCH}) \leq P_{CMAX}$, the terminal apparatus may send the $N_{sch,Tx,PSFCH}$ pieces of sidelink feedback data, and an actual transmit power of each of the $N_{sch,Tx,PSFCH}$ pieces of sidelink feedback data is $P_{PSFCH,one}$; and if $P_{PSFCH,one}$ + $10log_{10}(N_{sch,Tx,PSFCH}) > P_{CMAX}$, the terminal apparatus determines the $N_{Tx,PSFCH}$ pieces of sidelink feedback data from the $N_{sch,Tx,PSFCH}$ pieces of sidelink feedback data, and an actual transmit power of each of the $N_{Tx,PSFCH}$ pieces of sidelink feedback data is a smaller value in $P_{CMAX}$ - $10log_{10}(N_{Tx,PSFCH})$ and $P_{PSFCH,one}$.

A2:

$$N_{\text{sch,Tx,PSFCH}} > N_{\text{max,PSFCH}}$$

The terminal apparatus autonomously selects the $N_{\text{max,PSFCH}}$ pieces of sidelink feedback data in ascending order of priorities corresponding to the $N_{\text{sch,Tx,PSFCH}}$ pieces of sidelink feedback data.

If

$$P_{\text{PSFCH,one}} + 10log_{10}\big(N_{\text{max,PSFCH}}\big) \le P_{\text{CMAX}},$$

$$N_{\text{Tx,PSFCH}} = N_{\text{max,PSFCH}}$$

$$P_{\text{PSFCH,k}}(i) = P_{\text{PSFCH,one}} \quad [\text{dBm}].$$

Otherwise, the terminal apparatus autonomously selects the $N_{\text{Tx,PSFCH}}$ pieces of sidelink feedback data from the $N_{\text{max,PSFCH}}$ pieces of sidelink feedback data. $N_{\text{Tx,PSFCH}} \ge \max\big(1, \sum_{i=1}^{K} M_i\big)$, where $K$ is defined as a maximum value that satisfies $P_{\text{PSFCH,one}} + 10log_{10}\big(\max\big(1, \sum_{i=1}^{K} M_i\big)\big) \le P_{\text{CMAX}}$; or otherwise, $K=0$.

In this case, a transmit power $P_{\text{PSFCH,k}}(i)$ of a k$^{\text{th}}$ piece of sidelink feedback data of the $N_{\text{Tx,PSFCH}}$ pieces of sidelink feedback data is as follows:

$$P_{\text{PSFCH,k}}(i) = min\big(P_{\text{CMAX}} - 10log_{10}(N_{\text{Tx,PSFCH}}), P_{\text{PSFCH,one}}\big) \quad [\text{dBm}]$$

(4.2) dl-PO-PSFCH is not configured.

It is assumed that dl-PO-PSFCH is not configured, a transmit power $P_{\text{PSFCH,k}}(i)$ of a k$^{\text{th}}$ piece of sidelink feedback data of the $N_{\text{Tx,PSFCH}}$ pieces of sidelink feedback data is as follows:

$$P_{\text{PSFCH,k}}(i) = P_{\text{CMAX}} - 10log_{10}(N_{\text{Tx,PSFCH}}) \quad [\text{dBm}]$$

In addition, for resource pools configured with PSFCH resources that overlap in time, the terminal apparatus expects that no dl-PO-PSFCH or dl-Alpha-PSFCH is provided for any resource pool, or expects to provide a same dl-PO-PSFCH value and a same dl-Alpha-PSFCH value for all the resource pools.

It can be learned from descriptions of the foregoing related technical features that, the correspondence between the PSSCH resource and the PSFCH resource in the same resource pool is defined in the NR-V2X. For example, a PSSCH resource 1 corresponds to a PSFCH resource 1. If a terminal apparatus A receives, on the PSSCH resource 1, sidelink data from a terminal apparatus B, the terminal apparatus A may send, on the PSFCH resource 1, sidelink feedback data corresponding to the sidelink data to the terminal apparatus B.

To improve a sidelink data transmission rate, the carrier aggregation technology is currently considered to be used in the NR-V2X. However, after the carrier aggregation is introduced in the NR-V2X, there is currently no corresponding solution for how the terminal apparatus performs sidelink feedback.

Based on this, in embodiments of this application, related implementation of sidelink feedback in a carrier aggregation scenario is studied. For example, embodiments of this application provide a communication method, to perform sidelink feedback based on a capability limitation of a terminal in the carrier aggregation scenario.

For example, after the carrier aggregation technology is used in the NR-V2X, the terminal apparatus may receive a plurality of pieces of sidelink data, and the plurality of pieces of sidelink data may be located in resource pools of different carriers. For example, the network apparatus separately configures a resource pool 1 for a carrier 1, configures a resource pool 2 for a carrier 2, and configures a resource pool 3 for a carrier 3. A PSFCH configuration period corresponding to the resource pool 1 is 4, a PSFCH configuration period corresponding to the resource pool 2 is 2, a PSFCH configuration period corresponding to the resource pool 3 is 1, and a PSSCH feedback time interval $K$ is equal to 2. If a terminal apparatus 1 separately receives 10 pieces of sidelink data (namely, sidelink data 1 to sidelink data 10, where the sidelink data 1 to the sidelink data 4 are located in the resource pool 1 of the carrier 1, the sidelink data 5 to the sidelink data 7 are located in the resource pool 2 of the carrier 2, and the sidelink data 8 to the sidelink data 10 are located in the resource pool 3 of the carrier 3) in the three resource pools of the three carriers, the 10 pieces of sidelink data correspond to 10 pieces of sidelink feedback data. It can be learned from descriptions of the PSFCH resource in the NR-V2X that, sidelink feedback data corresponding to the sidelink data 1 to the sidelink data 4 in the resource pool 1 is located in a same feedback slot (namely, a slot x8), sidelink feedback data corresponding to the sidelink data 5 to the sidelink data 7 in the resource pool 2 is located in the same feedback slot (namely, the slot x8), and sidelink feedback data corresponding to the sidelink data 8 to the sidelink data 10 in the resource pool 3 is located in the same feedback slot (namely, the slot x8). In this case, the terminal apparatus needs to simultaneously send the 10 pieces of sidelink feedback data. However, due to a capability limitation of the terminal apparatus or the like, the terminal apparatus may not be able to simultaneously send the 10 pieces of sidelink feedback data. In this case, some possible solutions are provided in embodiments of this application for how the terminal apparatus sends the sidelink feedback data.

The following describes in detail the solutions provided in embodiments of this application. The solutions provided in embodiments of this application relate to a first terminal apparatus and one or more second terminal apparatuses, and optionally, further relate to a network apparatus. The "first terminal apparatus" may be a terminal apparatus that receives sidelink data and sends sidelink feedback data corresponding to the sidelink data, and the "second terminal apparatus" may be a terminal apparatus that sends the sidelink data and receives the sidelink feedback data corresponding to the sidelink data. Unless otherwise specified, the "terminal apparatus" may be a terminal device, or may be a component in the terminal device, for example, a chip or a chip system. The "network apparatus" may be a network device, for example, a base station, or may be a component in the network device, for example, a chip or a chip system.

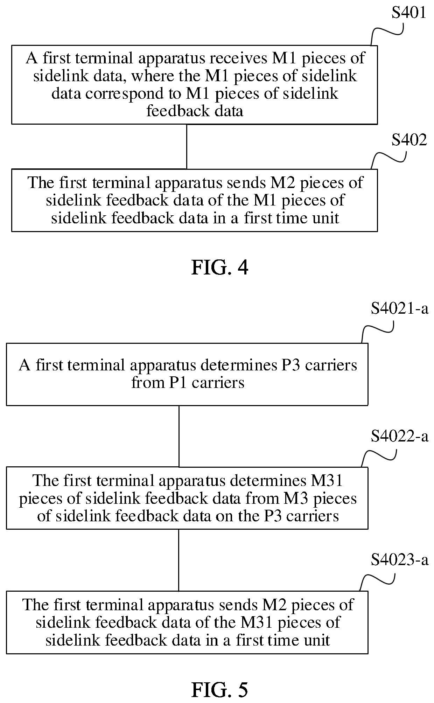

FIG. 4 is a schematic flowchart corresponding to a communication method according to an embodiment of this application. As shown in FIG. 4, the method includes S401 and S402.

S401: A first terminal apparatus receives M1 pieces of sidelink data.

The M1 pieces of sidelink data may be from a same second terminal apparatus, or may be from a plurality of second terminal apparatuses. One of the M1 pieces of sidelink data may refer to a PSSCH or PSCCH transmission (a PSSCH/PSCCH transmission), and sidelink feedback data corresponding to one piece of sidelink data may refer to a PSFCH transmission (a PSFCH transmission).

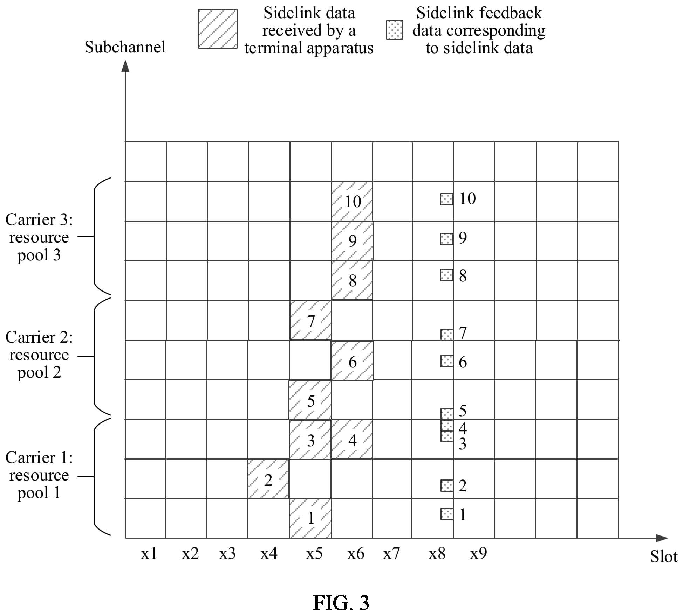

The M1 pieces of sidelink data are located on P1 carriers. For example, the M1 pieces of sidelink data are located in a resource pool of the P1 carriers. For example, the M1 pieces of sidelink data include sidelink data 1 to sidelink data 10 (that is, M1=10) in FIG. 3, and the P1 carriers include a carrier 1, a carrier 2, and a carrier 3.

Sidelink feedback data corresponding to each of the M1 pieces of sidelink data and corresponding sidelink data are located on a same carrier. For example, the sidelink feedback data corresponding to each of the M1 pieces of sidelink data and the corresponding sidelink data are located in a same resource pool of the same carrier. The sidelink data and the sidelink feedback data are in one-to-one correspondence. "The sidelink feedback data corresponding to each of the M1 pieces of sidelink data and the corresponding sidelink data are located in the same resource pool of the same carrier" means that one piece of sidelink data and sidelink feedback data corresponding to the sidelink data are located in the same resource pool of the same carrier. For example, as shown in FIG. 3, both sidelink feedback data 1 corresponding to the sidelink data 1 and the sidelink data 1 are located in a resource pool 1, both sidelink feedback data 2 corresponding to the sidelink data 2 and the sidelink data 2 are located in the resource pool 1, both sidelink feedback data 5 corresponding to the sidelink data 5 and the sidelink data 5 are located in a resource pool 2, and both sidelink feedback data 9 corresponding to the sidelink data 9 and the sidelink data 9 are located in a resource pool 3. Details are not described again.

It may be understood that, in FIG. 3, an example in which one carrier includes one resource pool is used for illustration. In another example, one carrier may also include two or more resource pools. For example, the carrier 3 includes two resource pools: a resource pool a and a resource pool b. The sidelink data 8 and the sidelink data 9 are located in the resource pool a, and the sidelink data 10 is located in the resource pool b. In this case, both the sidelink data 8 and corresponding sidelink feedback data 8 are located in the resource pool a, and both the sidelink data 10 and corresponding sidelink feedback data 10 are located in the resource pool b.

M1 pieces of sidelink feedback data corresponding to the M1 pieces of sidelink data are located in a first time unit. In other words, the M1 pieces of sidelink feedback data are sidelink feedback data that needs to be sent in the first time unit. The first time unit may be one slot, or may be one or more symbols in a slot. For example, when the M1 pieces of sidelink data include the sidelink data 1 to the sidelink data 10 in FIG. 3, the first time unit may be a slot x8, or may be a symbol on which a PSFCH in the slot x8 is located.

It may be understood that, in embodiments of this application, "sidelink data is located on a carrier/in a resource pool" may mean that the sidelink data is carried on a time-frequency resource (for example, a PSSCH/PSCCH resource) in a resource pool corresponding to the carrier, that is, the sidelink data is transmitted on the time-frequency resource in the resource pool corresponding to the carrier. Similarly, "sidelink data on a carrier" may be sidelink data carried in a resource pool corresponding to the carrier. "Sidelink feedback data is located on a carrier/in a resource pool" may mean that the sidelink feedback data is carried on a time-frequency resource (for example, a PSFCH resource) in a resource pool corresponding to the carrier, that is, the sidelink feedback data is transmitted on the time-frequency resource in the resource pool corresponding to the carrier. Similarly, "sidelink feedback data on a carrier" may be sidelink feedback data carried in a resource pool corresponding to the carrier. For other similar parts, refer to the foregoing descriptions.

For example, in some possible scenarios, after receiving the sidelink data, the first terminal apparatus may determine, based on a receiving result (for example, a decoding result) of the sidelink data, whether feedback needs to be performed for the sidelink data. In embodiments of this application, an example in which the first terminal apparatus determines, based on decoding results of the M1 pieces of sidelink data, that the M1 pieces of sidelink feedback data corresponding to the M1 pieces of sidelink data need to be fed back is used for description.

S402: The first terminal apparatus sends M2 pieces of sidelink feedback data of the M1 pieces of sidelink feedback data in the first time unit.

The M2 pieces of sidelink feedback data are located on P2 carriers, M2 is less than or equal to a quantity of pieces of sidelink feedback data the first terminal apparatus is capable of sending in the first time unit (that is, a maximum quantity of pieces of sidelink feedback data the first terminal apparatus is capable of sending simultaneously or concurrently), P2 is less than or equal to P1, and P2 is less than or equal to a quantity of carriers on which the first terminal apparatus is capable of sending sidelink feedback data in the first time unit (that is, a maximum quantity of carriers on which the first terminal apparatus is capable of simultaneously sending or concurrently sending the sidelink feedback data); and M1, M2, P1, and P2 are positive integers, and M1 is greater than or equal to M2.

For example, there are a plurality of specific implementations in which the first terminal apparatus sends the M2 pieces of sidelink feedback data in the first time unit. For example, the first terminal apparatus may send the M2 pieces of sidelink feedback data in a multicast manner, a broadcast manner, or a unicast manner. A manner of sending the M2 pieces of sidelink feedback data is not specifically limited in this application.

According to the foregoing method, the first terminal apparatus may restrict, based on a capability limitation of the first terminal apparatus (namely, a quantity of pieces of sidelink feedback data the first terminal apparatus is capable of sending simultaneously in the first time unit and/or a quantity of carriers on which the first terminal apparatus is capable of sending sidelink feedback data in the first time unit), a quantity of pieces of sent sidelink feedback data and/or a quantity of carriers on which the sidelink feedback data is sent, so that both the quantity of pieces of sent sidelink feedback data and the quantity of carriers on which the sidelink feedback data is sent satisfy the capability limitation of the terminal apparatus, to improve sidelink communication efficiency.

For example, there may be a plurality of specific implementations of S402. The following describes four possible implementations with reference to Implementation 1 to Implementation 4.

1. Implementation 1

In Implementation 1, referring to FIG. 5, S402 may include S4021-a to S4023-a.

S4021-a: The first terminal apparatus determines P3 carriers from P1 carriers, where M3 pieces of sidelink feedback data of the M1 pieces of sidelink feedback data are located on the P3 carriers.

"Determining" in "determining the P3 carriers from the P1 carriers" may also be replaced with "selecting". For other similar parts, refer to the foregoing descriptions.

For example, the first terminal apparatus may first determine whether P1 is greater than P0 (P0 is a maximum quantity of carriers on which the first terminal apparatus is capable of simultaneously sending or concurrently sending sidelink feedback data, and P0=2 is used as an example in this embodiment of this application). If P1 is less than or equal to P0, the P3 carriers determined by the first terminal apparatus are the P1 carriers, that is, P3=P1. If P1 is greater than P0, the P3 carriers determined by the first terminal apparatus include a part of the P1 carriers, that is, P3 is less than P1, and P3 is equal to P0.

When P1 is greater than P0, the first terminal apparatus may determine the P3 carriers from the P1 carriers based on a plurality of possible parameters. For example, the first terminal apparatus may determine the P3 carriers from the P1 carriers according to at least one of the following ① to ⑤: ① a priority of sidelink feedback data on each of the P1 carriers; ② a quantity of pieces of sidelink feedback data on each of the P1 carriers; ③ a quantity of second terminal apparatuses corresponding to the sidelink feedback data on each of the P1 carriers; ④ a sidelink feedback capability of each of the P1 carriers in the first time unit, for example, a quantity of pieces of sidelink feedback data that is capable of being sent on each of the P1 carriers in the first time unit; and ⑤ a channel busy ratio (channel busy ratio, CBR) of each of the P1 carriers. Alternatively, the first terminal apparatus may randomly determine the P3 carriers from the P1 carriers.

The following describes several examples in which the first terminal apparatus determines the P3 carriers from the P1 carriers with reference to Example 1 to Example 5.

Example 1

The first terminal apparatus may determine the P3 carriers from the P1 carriers based on the priority of the sidelink feedback data on each of the P1 carriers, to satisfy a feedback requirement of sidelink feedback data with a high priority.

The P3 carriers include a part of or all of P31 carriers, and the P31 carriers include a carrier on which highest-priority sidelink feedback data of the M1 pieces of sidelink feedback data is located. For example, the P31 carriers are a set formed by carriers on which the highest-priority sidelink feedback data of the M1 pieces of sidelink feedback data is located, and P31 is a positive integer.

For example, sidelink data may include priority information, and the priority information indicates a priority of sidelink feedback data corresponding to the sidelink data. After receiving the sidelink data, the first terminal apparatus may obtain the priority of the sidelink feedback data corresponding to the sidelink data. A lower value of a priority indicates a higher priority. For example, a priority 1 is higher than a priority 2, and the priority 2 is higher than a priority 3. For example, the M1 pieces of sidelink feedback data include the sidelink feedback data 1 to the sidelink feedback data 10 in FIG. 3, and a priority of the sidelink feedback data 1 to a priority of the sidelink feedback data 10 are shown in Table 1.

Table 1: Example of the priorities of the sidelink feedback data 1 to the sidelink feedback data 10

| Carrier | Sidelink feedback data | Priority |
|---|---|---|
| Carrier 1 | Sidelink feedback data 1 | 1 |
| | Sidelink feedback data 2 | 1 |
| | Sidelink feedback data 3 | 2 |
| | Sidelink feedback data 4 | 3 |
| Carrier 2 | Sidelink feedback data 5 | 1 |
| | Sidelink feedback data 6 | 2 |
| | Sidelink feedback data 7 | 3 |
| Carrier 3 | Sidelink feedback data 8 | 1 |
| | Sidelink feedback data 9 | 3 |
| | Sidelink feedback data 10 | 4 |

It can be learned from Table 1 that, a highest priority of the priorities of the M1 pieces of sidelink feedback data (the sidelink feedback data 1 to the sidelink feedback data 10) is the priority 1, and highest-priority sidelink feedback data of the M1 pieces of sidelink feedback data is the sidelink feedback data 1, the sidelink feedback data 2, the sidelink feedback data 5, and the sidelink feedback data 8. A carrier on which the sidelink feedback data 1 and the sidelink feedback data 2 are located is the carrier 1. A carrier on which the sidelink feedback data 5 is located is the carrier 2. A carrier on which the sidelink feedback data 8 is located is the carrier 3. Therefore, the P31 carriers include the carrier 1, the carrier 2, and the carrier 3.

If P31 is equal to P0, the first terminal apparatus may directly use the P31 carriers as the P3 carriers. In this case, the P3 carriers include all of the P31 carriers, and P31 is equal to P3.

If P31 is greater than P0, the first terminal apparatus may determine the P3 carriers from the P31 carriers. In this case, the P3 carriers are a part of the P31 carriers, and P31 is greater than P3.

Case 1: When quantities of pieces of highest-priority sidelink feedback data on different carriers of the P31 carriers are different, the first terminal apparatus may determine, from the P31 carriers, the P3 carriers on which a quantity of pieces of highest-priority sidelink feedback data is relatively large. In this case, a quantity of pieces of highest-priority sidelink feedback data on any one of the P3 carriers is greater than a quantity of pieces of highest-priority sidelink feedback data on any one of the P31 carriers other than the P3 carriers.

For example, a quantity of pieces of highest-priority sidelink feedback data on the carrier 1 is 3, a quantity of pieces of highest-priority sidelink feedback data on the carrier 2 is 2, and a quantity of pieces of highest-priority sidelink feedback data on the carrier 3 is 1 (the quantity of pieces of highest-priority sidelink feedback data on the carrier 1 is greater than the quantity of pieces of highest-priority sidelink feedback data on the carrier 2, and is greater than the quantity of pieces of highest-priority sidelink feedback data on the carrier 3). Therefore, the P3 carriers determined by the first terminal apparatus may include the carrier 1 and the carrier 2.

Case 2: When quantities of pieces of highest-priority sidelink feedback data on different carriers of the P31 carriers are the same, the first terminal apparatus may determine the P3 carriers from the P31 carriers based on a priority of second-highest-priority sidelink feedback data on each of the P31 carriers. In this case, a priority of second-highest-priority sidelink feedback data on any one of the P3 carriers is higher than or equal to a priority of second-highest-priority sidelink feedback data on any one of the P31 carriers other than the P3 carriers.

For example, a quantity of pieces of highest-priority sidelink feedback data on the carrier 1, the carrier 2, and the carrier 3 is 1. A priority of second-highest-priority sidelink feedback data on the carrier 1 is 2, a priority of second-highest-priority sidelink feedback data on the carrier 2 is 3, and a priority of second-highest-priority sidelink feedback data on the carrier 3 is 4 (the priority of the second-highest-priority sidelink feedback data on the carrier 1 is higher than the priority of the second-highest-priority sidelink feedback data on the carrier 2, and is higher than the priority of the second-highest-priority sidelink feedback data on the carrier 3). In this case, the P3 carriers determined by the first terminal apparatus may include the carrier 1 and the carrier 2.

It may be understood that, Case 1 and Case 2 describe two possible implementations. In specific implementation, the manners in Case 1 and Case 2 may be used until P3 (in this case, P3=P0) carriers are determined. For example, a priority of sidelink feedback data on the carrier 1, a priority of sidelink feedback data on the carrier 2, and a priority of sidelink feedback data on the carrier 3 are shown in Table 1. In this case, the first terminal apparatus may first determine, from the three carriers, a carrier, namely, the carrier 1, on which a quantity of pieces of highest-priority sidelink feedback data is the largest. Because a quantity of determined carriers is 1 (less than P3), the first terminal apparatus may continue to determine a carrier from the remaining carrier 2 and carrier 3. Because a quantity of pieces of highest-priority sidelink feedback data on the carrier 2 is equal to a quantity of pieces of highest-priority sidelink feedback data on the carrier 3 (both are 1), the first terminal apparatus may compare priorities of second-highest-priority sidelink feedback data on the carrier 2 and the carrier 3. Because the priority of the second-highest-priority sidelink feedback data on the carrier 2 is 2, and the priority of the second-highest-priority sidelink feedback data on the carrier 3 is 3, the first terminal apparatus may determine the carrier 2. In this case, the first terminal apparatus determines the carrier 1 and the carrier 2 in total, and a quantity of determined carriers is equal to P3. Therefore, the first terminal apparatus may stop carrier selection/determining. In a more general implementation case, for example, for a larger P0, the foregoing process of determining a carrier may continue until a quantity of needed carriers is selected/determined.

If P31 is less than P0, the P3 carriers include all of the P31 carriers, and further include a part of or all of the P32 carriers. The P32 carriers are carriers on which highest-priority sidelink feedback data of sidelink feedback data other than sidelink feedback data on the P31 carriers in the M1 pieces of sidelink feedback data is located, and P32 is a positive integer. In this case, because P31 is less than P0, after determining the P31 carriers, the first terminal apparatus may continue to determine (P3-P31) carriers from remaining carriers (carriers other than P31 carriers in the P1 carriers, namely, (P1-P31) carriers) until the P3 carriers are determined. The first terminal apparatus determines the (P3-P31) carriers from the (P1-P31) carriers, that is, after the P31 carriers are excluded, the first terminal apparatus determines the (P3-P31) carriers based on a quantity of pieces of highest-priority sidelink feedback data on the (P1-P31) carriers and/or a priority of second-highest-priority sidelink feedback data on the (P1-P31) carriers. For specific implementation, refer to the foregoing descriptions.

Example 2

The first terminal apparatus determines the P3 carriers from the P1 carriers based on the quantity of pieces of sidelink feedback data on each of the P1 carriers.

A quantity of pieces of sidelink feedback data on any one of the P3 carriers is greater than or equal to a quantity of pieces of sidelink feedback data on any one of the P1 carriers other than the P3 carriers. In other words, the first terminal apparatus may determine, from the P1 carriers, the P3 carriers on which a quantity of pieces of sidelink feedback data is relatively large, to send a large quantity of pieces of sidelink feedback data. For example, a quantity of pieces of sidelink feedback data on a carrier 1 is 4, a quantity of pieces of sidelink feedback data on a carrier 2 is 3, and a quantity of pieces of sidelink feedback data on a carrier 3 is 2. In this case, the P3 carriers determined by the first terminal apparatus may include the carrier 1 and the carrier 2.

It may be understood that, when quantities of pieces of sidelink feedback data on the two carriers are the same, the first terminal apparatus may randomly determine one of the two carriers, or may determine one of the two carriers based on another possible parameter (for example, at least one of ①, ③, ④, and ⑤). For example, a priority of sidelink feedback data on the carrier 1, a priority of sidelink feedback data on the carrier 2, and a priority of sidelink feedback data on the carrier 3 are shown in Table 1. A quantity of pieces of sidelink feedback data on the carrier 1 is 4, a quantity of pieces of sidelink feedback data on the carrier 2 is 3, and a quantity of pieces of sidelink feedback data on the carrier 3 is 3. After determining, based on the quantities of pieces of sidelink feedback data on the carriers, the carrier 1 on which the quantity of pieces of sidelink feedback data is the largest, the first terminal apparatus further needs to determine one carrier from the remaining carrier 2 and carrier 3. In this case, the first terminal apparatus may determine one carrier from the carrier 2 and the carrier 3 based on priorities of the sidelink feedback data on the carrier 2 and the carrier 3 (that is, perform determining based on ①). For example, a quantity of pieces of highest-priority sidelink feedback data on the carrier 2 is the same as a quantity of pieces of highest-priority sidelink feedback data on the carrier 3, but a priority of second-highest-priority sidelink feedback data on the carrier 2 is 2, and a priority of second-highest-priority sidelink feedback data on the carrier 3 is 3 (that is, the priority of the second-highest-priority sidelink feedback data on the carrier 2 is higher than the priority of the second-highest-priority sidelink feedback data on the carrier 3). Therefore, the first terminal apparatus may determine the carrier 2. Further, the P3 carriers determined by the first terminal apparatus include the carrier 1 and the carrier 2.

Example 3

The first terminal apparatus determines the P3 carriers from the P1 carriers based on a quantity of second terminal apparatuses that correspond to sidelink feedback data on each of the P1 carriers.

A quantity of second terminal apparatuses that correspond to sidelink feedback data on any one of the P3 carriers is greater than or equal to a quantity of second terminal apparatuses that correspond to sidelink feedback data on any one of the P1 carriers other than the P3 carriers. In other words, the first terminal apparatus may determine, from the P1 carriers, the P3 carriers on which a quantity of corresponding second terminal apparatuses is relatively large, to serve more terminal apparatuses. The second terminal apparatus corresponding to the sidelink feedback data is a terminal apparatus configured to receive the sidelink feedback data. A quantity of second terminal apparatuses corresponding to the sidelink feedback data on the carrier may also be considered as a quantity of terminal apparatuses configured to receive the sidelink feedback data sent by the first terminal apparatus on the carrier (a terminal apparatus configured to send the sidelink feedback data and a terminal apparatus configured to receive sidelink feedback data corresponding to the sidelink feedback data are a same terminal apparatus) or a quantity of terminal apparatuses that can be served by the sidelink feedback data sent by the first terminal apparatus on the carrier.

For example, a quantity of second terminal apparatuses corresponding to a carrier 1 is 4 (that is, sidelink feedback data 1 to sidelink feedback data 4 on the carrier 1 correspond to four second terminal apparatuses), a quantity of second terminal apparatuses corresponding to a carrier 2 is 3 (that is, sidelink feedback data 5 to sidelink feedback data 7 on the carrier 2 correspond to three second terminal apparatuses), and a quantity of second terminal apparatuses corresponding to a carrier 3 is 2 (for example, sidelink feedback data 8 and sidelink feedback data 9 on the carrier 3 correspond to a same second terminal apparatus, and sidelink feedback data 10 corresponds to another second terminal apparatus). In this case, the P3 carriers determined by the first terminal apparatus may include the carrier 1 and the carrier 2.

It may be understood that, when quantities of pieces of sidelink feedback data on the two carriers correspond to a same quantity of second terminal apparatuses, the first terminal apparatus may randomly determine one of the two carriers, or may determine one of the two carriers based on another possible parameter (for example, at least one of ①, ②, ④, and ⑤). For example, a priority of sidelink feedback data on the carrier 1, a priority of sidelink feedback data on the carrier 2, and a priority of sidelink feedback data on the carrier 3 are shown in Table 1. A quantity of second terminal apparatuses corresponding to the sidelink feedback data on the carrier 1 is 4, a quantity of second terminal apparatuses corresponding to the sidelink feedback data on the carrier 2 is 3, and a quantity of second terminal apparatuses corresponding to the sidelink feedback data on the carrier 3 is 3. After determining, based on the quantities of second terminal apparatuses corresponding to the sidelink feedback data on the carriers, the carrier 1 on which the quantity of corresponding second terminal apparatuses is the largest, the first terminal apparatus further needs to determine one carrier from the remaining carrier 2 and carrier 3. In this case, the first terminal apparatus may determine one carrier from the carrier 2 and the carrier 3 based on priorities of the sidelink feedback data on the carrier 2 and the carrier 3 (that is, perform determining based on ①). For example, a quantity of pieces of highest-priority sidelink feedback data on the carrier 2 is the same as a quantity of pieces of highest-priority sidelink feedback data on the carrier 3, but a priority of second-highest-priority sidelink feedback data on the carrier 2 is 2, and a priority of second-highest-priority sidelink feedback data on the carrier 3 is 3 (that is, the priority of the second-highest-priority sidelink feedback data on the carrier 2 is higher than the priority of the second-highest-priority sidelink feedback data on the carrier 3). Therefore, the first terminal apparatus may determine the carrier 2. Further, the P3 carriers determined by the first terminal apparatus include the carrier 1 and the carrier 2.

Example 4

The first terminal apparatus determines the P3 carriers from the P1 carriers based on a quantity of pieces of sidelink feedback data that is capable of being sent on each of the P1 carriers in the first time unit. A quantity of pieces of sidelink feedback data that is capable of being sent on any one of the P3 carriers in the first time unit is greater than or equal to a quantity of pieces of sidelink feedback data that is capable of being sent on any one of the P1 carriers other than the P3 carriers in the first time unit. In other words, the first terminal apparatus may determine, from the P1 carriers, the P3 carriers on which a large quantity of pieces of sidelink feedback data is capable of being sent in the first time unit.

For example, the quantity of pieces of sidelink feedback data that is capable of being sent on the carrier in the first time unit may be configured through a resource pool on the carrier. For example, a carrier 1 includes a resource pool 1. The first terminal apparatus may determine, based on a PSFCH configuration period corresponding to the resource pool 1, a bitmap of a PSFCH frequency domain resource, and the like, a quantity of pieces of sidelink feedback data that is capable of being sent in the resource pool 1 in the first time unit (namely, a quantity of PSFCH resources in the resource pool 1 in the first time unit), for example, 12. In this case, the quantity of pieces of sidelink feedback data that is capable of being sent on the carrier 1 in the first time unit is 12. In addition, if the carrier 1 includes a plurality of resource pools, the first terminal apparatus may use a sum of quantities of pieces of sidelink feedback data that is capable of being sent in the plurality of resource pools in the first time unit as the quantity of pieces of sidelink feedback data that is capable of being sent on the carrier 1 in the first time unit.

It may be understood that, when quantities of pieces of sidelink feedback data that is capable of being sent on two carriers in the first time unit are the same, the first terminal apparatus may randomly determine one of the two carriers, or may determine one of the two carriers based on another possible parameter (for example, at least one of ①, ②, ③, and ⑤). For example, a quantity of pieces of sidelink feedback data on the carrier 1, a quantity of pieces of sidelink feedback data on the carrier 2, and a quantity of pieces of sidelink feedback data on the carrier 3 are shown in Table 1. A quantity of pieces of sidelink feedback data that is capable of being sent on the carrier 1 in the first time unit is 12, a quantity of pieces of sidelink feedback data that is capable of being sent on the carrier 2 in the first time unit is 8, and a quantity of pieces of sidelink feedback data that is capable of being sent on the carrier 3 in the first time unit is 6. After determining, based on the quantities of pieces of sidelink feedback data that is capable of being sent on the carriers in the first time unit, the carrier 1 on which the quantity of pieces of sidelink feedback data that is capable of being sent in the first time unit is the largest, the first terminal apparatus further needs to determine one carrier from the remaining carrier 2 and carrier 3. In this case, the first terminal apparatus may determine one carrier from the carrier 2 and the carrier 3 based on a quantity of second terminal apparatuses corresponding to the carrier 2 and a quantity of second terminal apparatuses corresponding to the carrier 3 (that is, perform determining based on ③). For example, a quantity of second terminal apparatuses corresponding to the sidelink feedback data on the carrier 2 is greater than a quantity of second terminal apparatuses corresponding to the sidelink feedback data on the carrier 3. In this case, the first terminal apparatus may determine the carrier 2, and the P3 carriers determined by the first terminal apparatus include the carrier 1 and the carrier 2.

Example 5

The first terminal apparatus determines the P3 carriers from the P1 carriers based on a channel busy ratio of each of the P1 carriers. A channel busy ratio of any one of the P3 carriers is lower than or equal to a channel busy ratio of any one of the P1 carriers other than the P3 carriers. In other words, the first terminal apparatus may determine, from the P1 carriers, the P3 carriers with low channel busy ratios, to send sidelink feedback data as much as possible on the carriers with the low channel busy ratios.

For example, the channel busy ratio of the carrier may be a channel busy ratio of the carrier in a second time unit. The second time unit is located in a time window before the first time unit. For example, an end position of the time window may be a start position of the first time unit (for example, a start position of a third-to-last symbol of a slot x8 in FIG. 3). A start position of the time window may be a start position of a first slot. The first slot is the first $K$-1 slots of slots of the first time unit ($K$ is a time interval for PSSCH feedback). For example, if $K$=2, and the slot of the first time unit is the slot x8 in FIG. 3, the first slot is a slot x7.

For example, the channel busy ratio of the carrier may be an average value of channel busy ratios of all channels on the carrier. A specific calculation manner of "the channel busy ratio of the carrier" is not limited in this embodiment of this application. For example, a calculation manner of a channel busy ratio of carrier selection (carrier selection) in LTE V2X CA may be multiplexed.

It may be understood that, when channel busy ratios of two carriers are the same, the first terminal apparatus may randomly determine one of the two carriers, or may determine one of the two carriers based on another possible parameter (for example, at least one of ①, ②, ③, and ④). For example, a channel busy ratio of a carrier 1, a channel busy ratio of a carrier 2, and a channel busy ratio of a carrier 3 are r1, r2, and r3 (r1<r2=r3) respectively. After determining the carrier 1 based on the channel busy ratios of the carriers, the first terminal apparatus further needs to determine one carrier from the remaining carrier 2 and carrier 3. In this case, the first terminal apparatus may determine one carrier from the carrier 2 and the carrier 3 based on a quantity of second terminal apparatuses corresponding to sidelink feedback data on the carrier 2 and a quantity of second terminal apparatuses corresponding to sidelink feedback data on the carrier 3 (that is, perform determining based on ③). For example, the quantity of second terminal apparatuses corresponding to the sidelink feedback data on the carrier 2 is greater than the quantity of second terminal apparatuses corresponding to the sidelink feedback data on the carrier 3. In this case, the first terminal apparatus may determine the carrier 2, and the P3 carriers determined by the first terminal apparatus include the carrier 1 and the carrier 2.

Example 1 to Example 5 separately describe some implementations of determining the P3 carriers based on different parameters. In another possible example, a carrier may be determined according to any plurality of items of ① to ⑤. For a specific determining principle, refer to Example 1 to Example 5.

S4022-a: The first terminal apparatus determines M31 pieces of sidelink feedback data from the M3 pieces of sidelink feedback data on the P3 carriers.

For example, if the P3 carriers determined in S4021-a include the carrier 1 and the carrier 2, the M3 pieces of sidelink feedback data include the sidelink feedback data on the carrier 1 and the sidelink feedback data on the carrier 2, namely, sidelink feedback data 1 to sidelink feedback data 7 in FIG. 3.

For example, the first terminal apparatus may first determine whether M3 is greater than $N_{max,PSFCH}$ ($N_{max,PSFCH}$ is a maximum quantity of pieces of sidelink feedback data the first terminal apparatus is capable of sending simultaneously or concurrently, and $N_{max,PSFCH}=5$ is used as an example in this embodiment of this application). If M3 is less than or equal to $N_{max,PSFCH}$, the M31 pieces of sidelink feedback data determined by the first terminal apparatus are the M3 pieces of sidelink feedback data, that is, M3=M31. If M3 is greater than $N_{max,PSFCH}$, the M31 pieces of sidelink feedback data determined by the first terminal apparatus include a part of the M3 pieces of sidelink feedback data, that is, M31 is less than M3, and M31 may be equal to $N_{max,PSFCH}$.

When M3 is greater than $N_{max,PSFCH}$, the first terminal apparatus may determine the M31 pieces of sidelink feedback data from the M3 pieces of sidelink feedback data based on a plurality of possible parameters. For example, the first terminal apparatus may determine the M31 pieces of sidelink feedback data from the M3 pieces of sidelink feedback data according to at least one of the following ⑥ and ⑦: ⑥ priorities of the M3 pieces of sidelink feedback data; and ⑦ receiving time of sidelink data corresponding to the M3 pieces of sidelink feedback data. Alternatively, the first terminal apparatus may randomly determine the M31 pieces of sidelink feedback data from the M3 pieces of sidelink feedback data.

The following describes several examples of determining the M31 pieces of sidelink feedback data with reference to Example 6 and Example 7.

Example 6

The first terminal apparatus determines the M31 pieces of sidelink feedback data from the M3 pieces of sidelink feedback data based on the priorities of the M3 pieces of sidelink feedback data, where priorities of the M31 pieces of sidelink feedback data are higher than or equal to a priority of another piece of sidelink feedback data of the M3 pieces of sidelink feedback data other than the M31 pieces of sidelink feedback data. In other words, the first terminal apparatus may sort the M3 pieces of sidelink feedback data in ascending order of priorities, and select the M31 pieces of sidelink feedback data with a higher priority from the M3 pieces of sidelink feedback data.

For example, the M3 pieces of sidelink feedback data include the sidelink feedback data 1 to the sidelink feedback data 7 in FIG. 3, and a priority of each piece of sidelink feedback data is shown in Table 1. In this case, the M31 pieces of sidelink feedback data (namely, five pieces of sidelink feedback data) determined by the first terminal apparatus are the sidelink feedback data 1, the sidelink feedback data 2, the sidelink feedback data 5, the sidelink feedback data 3, and the sidelink feedback data 6.

It may be understood that, when priorities of two pieces of sidelink feedback data are the same, the first terminal apparatus may randomly determine one of the two pieces of the sidelink feedback data, or may determine one of the two carriers based on another possible parameter (for example, receiving time of sidelink data corresponding to sidelink feedback data). For example, the M3 pieces of sidelink feedback data include the sidelink feedback data 1 to the sidelink feedback data 7 in FIG. 3, and priorities of the sidelink feedback data 1 to the sidelink feedback data 7 are respectively 1, 1, 1, 2, 3, 3, and 4. The first terminal apparatus may first determine highest-priority sidelink feedback data (namely, the sidelink feedback data 1 to the sidelink feedback data 3). In this case, three pieces of sidelink feedback data are determined in total. Because the quantity of pieces of determined sidelink feedback data is less than M31 (equal to 5), the first terminal apparatus may continue to determine second-highest-priority sidelink feedback data (namely, the sidelink feedback data 4). In this case, four pieces of sidelink feedback data are determined in total. Because the quantity of pieces of determined sidelink feedback data is still less than M31, the first terminal apparatus may continue to determine another piece of sidelink feedback data from sidelink feedback data with a next priority (that is, a priority of 3). Because there are two pieces of sidelink feedback data with a priority of 3 (namely, the sidelink feedback data 5 and the sidelink feedback data 6), the first terminal apparatus may determine one piece of sidelink feedback data from the sidelink feedback data 5 and the sidelink feedback data 6 based on receiving time of sidelink data 5 corresponding to the sidelink feedback data 5 and receiving time of sidelink data 6 corresponding to the sidelink feedback data 6. For example, if the receiving time of the sidelink data 5 is earlier than the receiving time of the sidelink data 6, the first terminal apparatus may determine the sidelink feedback data 5, and the M31 pieces of sidelink data determined by the first terminal apparatus include the sidelink feedback data 1 to the sidelink feedback data 5.

Example 7

The first terminal apparatus determines M31 pieces of sidelink data from M3 pieces of sidelink data based on receiving time of the M3 pieces of sidelink data, to determine M31 pieces of sidelink feedback data corresponding to the M31 pieces of sidelink data, where receiving time of the M31 pieces of sidelink data is earlier than or equal to receiving time of another piece of sidelink data of the M3 pieces of sidelink data other than the M31 pieces of sidelink data. In other words, the first terminal apparatus may determine, from the M3 pieces of sidelink data, the M31 pieces of sidelink data whose receiving time is earlier. Receiving time of sidelink data is time at which the first terminal apparatus receives the sidelink data.

It may be understood that, when receiving time of sidelink data corresponding to two pieces of sidelink feedback data is the same, the first terminal apparatus may randomly determine one of the two pieces of sidelink feedback data, or may determine one of the two carriers based on another possible parameter (for example, a priority of the sidelink feedback data). For example, when receiving time of sidelink data 5 corresponding to the sidelink feedback data 5 and receiving time of sidelink data 6 corresponding to the sidelink feedback data 6 are the same, if a priority of the sidelink feedback data 5 is higher than a priority of the sidelink feedback data 6, the sidelink feedback data 5 may be determined.

The foregoing is described by using an example in which sidelink feedback data is determined based on a priority of the sidelink feedback data and/or receiving time of sidelink data corresponding to the sidelink feedback data. In another possible implementation, the first terminal apparatus may alternatively determine sidelink feedback data by combining a priority of the sidelink feedback data (or receiving time of sidelink data corresponding to the sidelink feedback data) with another parameter. For example, the first terminal apparatus first determines the sidelink feedback data based on the priority of the sidelink feedback data. When priorities of two pieces of sidelink feedback data are the same, the first terminal apparatus may determine one of the two pieces of sidelink feedback data based on second terminal apparatuses corresponding to the two pieces of sidelink feedback data. For example, the M3 pieces of sidelink feedback data include the sidelink feedback data 1 to the sidelink feedback data 7 in FIG. 3, and priorities of the sidelink feedback data 1 to the sidelink feedback data 7 are 1, 1, 1, 2, 3, 3, and 4 respectively. The sidelink feedback data 1 to the sidelink feedback data 4 are from a second terminal apparatus 1, the sidelink feedback data 5 is from a second terminal apparatus 2, and the sidelink feedback data 6 and the sidelink feedback data 7 are from the second terminal apparatus 1. The first terminal apparatus may first determine highest-priority sidelink feedback data (namely, the sidelink feedback data 1 to the sidelink feedback data 3). In this case, three pieces of sidelink feedback data are determined in total. Because the quantity of pieces of determined sidelink feedback data is less than M31 (equal to 5), the first terminal apparatus may continue to determine second-highest-priority sidelink feedback data (namely, the sidelink feedback data 4). In this case, four pieces of sidelink feedback data are determined in total. Because the quantity of pieces of determined sidelink feedback data is still less than M31, the first terminal apparatus may continue to determine another piece of sidelink feedback data from sidelink feedback data with a next priority (that is, a priority of 3). Because there are two pieces of sidelink feedback data with a priority of 3 (namely, the sidelink feedback data 5 and the sidelink feedback data 6), the first terminal apparatus may determine one of the two pieces of sidelink feedback data based on second terminal apparatuses corresponding to the two pieces of sidelink feedback data. For example, the sidelink feedback data 5 is from the second terminal apparatus 2 (the sidelink feedback data 5 and the four pieces of previously determined sidelink feedback data are from different second terminal apparatuses). The sidelink feedback data 6 is from the second terminal apparatus 1 (the sidelink feedback data 6 and the four pieces of previously determined sidelink feedback data are from the same second terminal apparatus). In this case, the first terminal apparatus may determine the sidelink feedback data 5, to send the sidelink feedback data to more second terminal apparatuses.

S4023-a: The first terminal apparatus sends M2 pieces of sidelink feedback data of the M31 pieces of sidelink feedback data in the first time unit.

In a possible implementation, after determining the M31 pieces of sidelink feedback data, the first terminal apparatus may directly send the M31 pieces of sidelink feedback data, that is, M2=M31.

In another possible implementation, after determining the M31 pieces of sidelink feedback data, the first terminal apparatus may send the M2 pieces of sidelink feedback data of the M31 pieces of sidelink feedback data based on power control. For example, the M31 pieces of sidelink feedback data include the sidelink feedback data 1, the sidelink feedback data 2, the sidelink feedback data 5, the sidelink feedback data 3, and the sidelink feedback data 6 in FIG. 3. The sidelink feedback data 1, the sidelink feedback data 2, and the sidelink feedback data 3 are located on the carrier 1, and the sidelink feedback data 5 and the sidelink feedback data 6 are located on the carrier 2.

For example, if a sum of preset transmit powers of the M31 pieces of sidelink feedback data is less than or equal to a maximum transmit power (namely, $P_{CMAX}$) of sidelink feedback data supported by the first terminal apparatus, the M31 pieces of sidelink feedback data are sent, where M31 is equal to M2; or if a sum of preset transmit powers of the M31 pieces of sidelink feedback data is greater than a maximum transmit power of sidelink feedback data supported by the first terminal apparatus, the M2 pieces of sidelink feedback data of the M31 pieces of sidelink feedback data are sent, where M31 is greater than M2.

Each carrier may correspond to one preset transmit power. For example, the carrier 1 corresponds to a preset transmit power 1, and the carrier 2 corresponds to a preset transmit power 2. A preset transmit power of each of the M31 pieces of sidelink feedback data may be a preset transmit power corresponding to a carrier on which corresponding sidelink feedback data is located. For example, a preset transmit power of sidelink feedback data that is on the carrier 1 and that is of the M31 pieces of sidelink feedback data is the preset transmit power 1 corresponding to the carrier 1, and a reference power of sidelink feedback data that is on the carrier 2 and that is of the M31 pieces of sidelink feedback data is the preset transmit power 2 corresponding to the carrier 2. In other words, a preset transmit power of the sidelink feedback data 1, a preset transmit power of the sidelink feedback data 2, and a preset transmit power of the sidelink feedback data 3 are the preset transmit power 1, and a preset transmit power of the sidelink feedback data 5 and a preset transmit power of the sidelink feedback data 6 are the preset transmit power 2. Further, the preset transmit power 1 and the preset transmit power 2 may be the same, or may be different.

After the first terminal apparatus determines the M31 pieces of sidelink feedback data, it is assumed that a quantity of pieces of sidelink feedback data on a carrier f is $N_{sch,Tx,PSFCH,f}$, and a terminal apparatus determines that a quantity of pieces of sent sidelink feedback data is $N_{Tx,PSFCH}$ ($N_{Tx,PSFCH}$ is M2). Based on the foregoing example (that is, the M31 pieces of sidelink feedback data include the sidelink feedback data 1, the sidelink feedback data 2, the sidelink feedback data 5, the sidelink feedback data 3, and the sidelink feedback data 6 in FIG. 3), when the carrier f is the carrier 1, $N_{sch,Tx,PSFCH,f}$ is equal to 3; or when the carrier f is the carrier 2, $N_{sch,Tx,PSFCH,f}$ is equal to 2. For a carrier set F (the carrier set F includes carriers on which the M31 pieces of sidelink feedback data are located, namely, the carrier 1 and the carrier 2), $N_{sch,Tx,PSFCH} = \Sigma_{f \in F} N_{sch,Tx,PSFCH,f}$, $\Sigma_{f \in F} N_{sch,Tx,PSFCH,f}$ is a sum of quantities of pieces of sidelink feedback data that needs to be fed back on the carrier 1 and the carrier 2, and $N_{sch,Tx,PSFCH}$=M31. Because M31$\leq$ **Nmax,PSFCH**, $N_{sch,Tx,PSFCH} \leq N_{max,PSFCH}$.

The following separately describes specific implementation of PSFCH power control in a carrier aggregation scenario when dl-PO-PSFCH is configured and when dl-PO-PSFCH is not configured.

(1) dl-PO-PSFCH is configured.

It is assumed that dl-PO-PSFCH is configured for each carrier f. For example, a first power $P_{PSFCH,one,f}$ corresponding to the carrier f satisfies the following formula:

$$P_{\text{PSFCH,one,f}} = P_{O,PSFCH} + 10\,log_{10}(2^{\mu}) + \alpha_{PSFCH} \cdot PL_{b,f,c} \ \ [\text{dBm}]$$

For meanings of the parameters, refer to descriptions in the foregoing "PSFCH power control".

An example in which the preset transmit power 1 corresponding to the carrier 1 is $P_{PSFCH,one,f}$ corresponding to the carrier 1, and the preset transmit power 2 corresponding to the carrier 2 is $P_{PSFCH,one,f}$ corresponding to the carrier 2 is used. If

$$\sum_{f \in F} 10^{\left(P_{\text{PSFCH,one,f}} + 10log_{10}\left(N_{\text{sch,Tx,PSFCH,f}}\right)\right)/10} \leq 10^{P_{CMAX}/10},$$

$$N_{\text{Tx,PSFCH}} = \sum_{f \in F} N_{\text{sch,Tx,PSFCH,f}}$$

$$P_{\text{PSFCH,k}}(i) = P_{\text{PSFCH,one,f}} \ \ [\text{dBm}]$$

That is, the first terminal apparatus sends the M31 pieces of sidelink feedback data, and a transmit power of sidelink feedback data that is on the carrier 1 and that is of the M31 pieces of sidelink feedback data is $P_{PSFCH,one,f}$ corresponding to the carrier 1 (that is, a transmit power of the sidelink feedback data 1, a transmit power of the sidelink feedback data 2, and a transmit power of the sidelink feedback data 3 are $P_{PSFCH,one,f}$ corresponding to the carrier 1). A transmit power of sidelink feedback data that is on the carrier 2 and that is of the M31 pieces of sidelink feedback data is $P_{PSFCH,one,f}$ corresponding to the carrier 2 (that is, a transmit power of the sidelink feedback data 5 and a transmit power of the sidelink feedback data 6 are $P_{PSFCH,one,f}$ corresponding to the carrier 2).

Otherwise, the first terminal apparatus determines $N_{Tx,PSFCH}$ pieces of sidelink feedback data from $\Sigma_{f \in F} N_{sch,Tx,PSFCH,f}$ pieces of sidelink feedback data (that is, determines the M2 pieces of sidelink feedback data from the M31 pieces of sidelink feedback data).

For example, the first terminal apparatus may determine the M2 pieces of sidelink feedback data from the M31 pieces of sidelink feedback data based on a plurality of possible parameters, for example, determine the M2 pieces of sidelink feedback data from the M31 pieces of sidelink feedback data according to at least one of ⑥ and ⑦. For another example, the first terminal apparatus may continue to use a determining manner of PSFCH power control in NR-V2X, to determine the $N_{Tx,PSFCH}$ pieces of sidelink feedback data from the $\Sigma_{f \in F} N_{sch,Tx,PSFCH,f}$ pieces of sidelink feedback data, where $N_{\text{Tx,PSFCH}} \geq \max\left(1, \sum_{f \in F} \sum_{i=1}^{K} M_{i,f}\right)$, and K is defined as a maximum value that satisfies $\sum_{f \in F} 10^{\left(P_{\text{PSFCH,one,f}} + 10log_{10}\left(\max\left(1, \sum_{i=1}^{K} M_{i,f}\right)\right)\right)/10} \leq 10^{P_{CMAX}/10}$. $M_{i,f}$: For 1≤i≤8, $M_{i,f}$ is a quantity of pieces of sidelink feedback data that is with a priority of i and has HARQ-ACK information and that is on the carrier f in the carrier set F; or for i>8, $M_{i,f}$ is a quantity of pieces of sidelink feedback data that is with a priority of i-8 and has conflict information and that is on the carrier $f$ in the carrier set F.

In this case, a transmit power $P_{PSFCH,k}(i)$ of a $k^{th}$ PSFCH in the $N_{Tx,PSFCH}$ pieces of sidelink feedback data is as follows:

$$\mathbf{P}_{PSFCH,k}(\mathbf{i}) = \mathbf{min}\big(\mathbf{P}_{CMAX} - \mathbf{10log}_{10}(\mathbf{N}_{Tx,PSFCH}), \mathbf{P}_{PSFCH,one,f}\big) \ [dBm]$$

That is, the first terminal apparatus sends the $N_{Tx,PSFCH}$ pieces of sidelink feedback data of the M31 pieces of sidelink feedback data, a power of sidelink feedback data that is on the carrier 1 and that is of the $N_{Tx,PSFCH}$ pieces of sidelink feedback data is a smaller value in $P_{CMAX}$ - $10log_{10}(N_{Tx,PSFCH})$ and $P_{PSFCH,one,f}$ corresponding to the carrier 1, and a power of sidelink feedback data that is on the carrier 2 and that is of the $N_{Tx,PSFCH}$ pieces of sidelink feedback data is a smaller value in $P_{CMAX}$ - $10log_{10}(N_{Tx,PSFCH})$ and $P_{PSFCH,one,f}$ corresponding to the carrier 2.

It may be understood that, the foregoing is described by using $\Sigma_{f\in F} N_{sch,Tx,PSFCH,f} \leq N_{max,PSFCH}$ as an example. In another possible embodiment, in a carrier aggregation scenario, if $\Sigma_{f\in F} N_{sch,Tx,PSFCH,f} > N_{max,PSFCH}$, the first terminal apparatus may first determine $N_{max,PSFCH}$ pieces of sidelink feedback data from the $\Sigma_{f\in F} N_{sch,Tx,PSFCH,f}$ pieces of sidelink feedback data, and then perform power control. For specific implementation, refer to the foregoing descriptions. Details are not described again.

(2) dl-PO-PSFCH is not configured.

It is assumed that dl-PO-PSFCH is not configured. If $\Sigma_{f\in F} N_{sch,Tx,PSFCH,f} \leq N_{max,PSFCH}$, $N_{Tx,PSFCH}$ may be equal to $\Sigma_{f\in F} N_{sch,Tx,PSFCH,f}$; or if $\Sigma_{f\in F} N_{sch,Tx,PSFCH,f} > N_{max,PSFCH}$, $N_{max,PSFCH}$ pieces of sidelink feedback data are determined from $\Sigma_{f\in F} N_{sch,Tx,PSFCH,f}$ pieces of sidelink feedback data, and in this case, $N_{Tx,PSFCH}$ is equal to $N_{max,PSFCH}$.

A power $P_{PSFCH,k}(i)$ of a $k^{th}$ piece of sidelink feedback data of the $N_{Tx,PSFCH}$ pieces of sidelink feedback data is as follows:

$$P_{PSFCH,k}(i) = P_{CMAX} - 10log_{10}(N_{Tx,PSFCH}) \ [dBm]$$

It may be understood that, the foregoing mainly describes a difference between "PSFCH power control in the carrier aggregation scenario" and "PSFCH power control in NR-V2X". For other content excluding the difference, and for implementation of "PSFCH power control in the carrier aggregation scenario", refer to implementation of "PSFCH power control in the NR-V2X".

In addition, the foregoing uses an example in which preset transmit powers corresponding to carriers are different. $P_{PSFCH,one,f}$ corresponding to different carriers. In another possible example, it is assumed that the M31 pieces of sidelink feedback data are located on P21 carriers, and a preset transmit power corresponding to each of the P21 carriers may also be a maximum value, a minimum value, an average value, or a median value of first powers corresponding to the P21 carriers. Alternatively, in a scenario in which a PCC is configured, a preset transmit power corresponding to each of the P21 carriers may be a first power corresponding to a PCC of the P21 carriers. When the preset transmit powers corresponding to the P21 carriers are equal (for example, all the preset transmit powers are $P_{PSFCH,one}$), $\Sigma_{f\in F} 10^{(P_{PSFCH,one,f}+10log_{10}(N_{sch,Tx,PSFCH,f}))/10} \leq 10^{P_{CMAX}/10}$ may be replaced with $P_{PSFCH,one} + 10log_{10}(\Sigma_{f\in F} N_{sch,Tx,PSFCH,f}) \leq P_{CMAX}$, and

$$\sum_{f\in F} 10^{\big(P_{PSFCH,one,f}+10log_{10}(\max(1,\sum_{i=1}^{K} M_{i,f}))\big)/10} \leq 10^{P_{CMAX}/10} \qquad \text{may be replaced with}$$

$P_{PSFCH,one} + 10log_{10}\big(\max\big(1, \sum_{f\in F} \sum_{i=1}^{K} M_{i,f}\big)\big) \leq P_{CMAX}$. For other implementations, refer to the foregoing implementation.

In Implementation 1, the first terminal apparatus first determines the P3 carriers from the P1 carriers based on the quantity of carriers on which the first terminal apparatus is capable of sending the sidelink feedback data in the first time unit (to satisfy a limitation on the quantity of carriers). Then, the first terminal apparatus determines the M31 pieces of sidelink feedback data from the M3 pieces of sidelink feedback data on the P3 carriers based on the quantity of pieces of sidelink feedback data the first terminal apparatus is capable of sending in the first time unit (to satisfy a limitation on the quantity of pieces of sidelink feedback data). Finally, the first terminal apparatus sends the M2 pieces of sidelink feedback data of the M31 pieces of sidelink feedback data based on power control. In this way, specific implementation of sidelink feedback and specific implementation of power control that are performed under a capability limitation of the first terminal apparatus are clarified, thereby improving sidelink communication efficiency while satisfying the capability limitation and the power limitation of the terminal apparatus.

2. Implementation 2

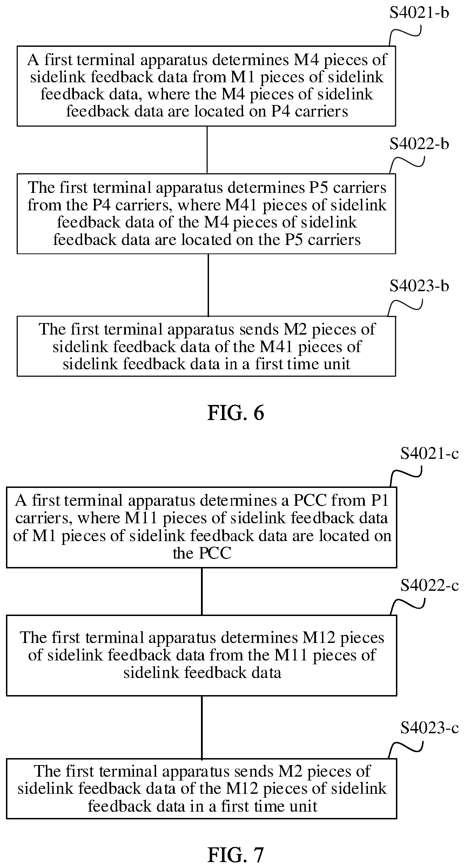

In Implementation 2, referring to FIG. 6, S402 may include S4021-b to S4023-b.

S4021-b: The first terminal apparatus determines M4 pieces of sidelink feedback data from the M1 pieces of sidelink feedback data, where the M4 pieces of sidelink feedback data are located on P4 carriers.

For example, the first terminal apparatus may first determine whether M1 is greater than $N_{max,PSFCH}$ ($N_{max,PSFCH}$ is a quantity of pieces of sidelink feedback data the first terminal apparatus is capable of sending simultaneously or concurrently, and $N_{max,PSFCH}=5$ is used as an example in this embodiment of this application). If M1 is less than or equal to $N_{max,PSFCH}$, the M4 pieces of sidelink feedback data determined by the first terminal apparatus are the M1 pieces of sidelink feedback data, that is, M4=M1. If M1 is greater than $N_{max,PSFCH}$, the M4 pieces of sidelink feedback data determined by the first terminal apparatus include a part of the M1 pieces of sidelink feedback data, that is, M4 is less than M1, and M4 may be equal to $N_{max,PSFCH}$.

When M1 is greater than $N_{max,PSFCH}$, the first terminal apparatus may determine the M4 pieces of sidelink feedback data from the M1 pieces of sidelink feedback data based on a plurality of possible parameters. For example, the first terminal apparatus may determine the M4 pieces of sidelink feedback data from the M1 pieces of sidelink feedback data according to at least one of the foregoing ⑥ and ⑦. For example, the first terminal apparatus may determine the M4 pieces of sidelink feedback data from the M1 pieces of sidelink feedback data based on priorities of the M1 pieces of sidelink feedback data, where priorities of the M4 pieces of sidelink feedback data are higher than or equal to a priority of another piece of sidelink feedback data of the M1 pieces of sidelink feedback data other than the M4 pieces of sidelink feedback data. For another example, the first terminal apparatus determines M4 pieces of sidelink data from M1 pieces of sidelink data based on receiving time of sidelink data corresponding to the M1 pieces of sidelink feedback data, to determine the M4 pieces of sidelink feedback data corresponding to the M4 pieces of sidelink data, where receiving time of the M4 pieces of sidelink data is earlier than or equal to receiving time of another piece of sidelink data of the M1 pieces of sidelink data other than the M4 pieces of sidelink data. For specific implementation, refer to the foregoing descriptions of "determining the M31 pieces of sidelink feedback data from the M3 pieces of sidelink feedback data".

For example, the M4 pieces of sidelink feedback data determined by the first terminal apparatus based on the priorities of the M1 pieces of sidelink feedback data include sidelink feedback data 1, sidelink feedback data 2, sidelink feedback data 5, sidelink feedback data 8, and sidelink feedback data 6. Because the sidelink feedback data 1 and the sidelink feedback data 2 are located on a carrier 1, the sidelink feedback data 5 and the sidelink feedback data 6 are located on a carrier 2, and the sidelink feedback data 8 is located on a carrier 3, the P4 carriers include the carrier 1, the carrier 2, and the carrier 3.

S4022-b: The first terminal apparatus determines P5 carriers from the P4 carriers, where M41 pieces of sidelink feedback data of the M4 pieces of sidelink feedback data are located on the P5 carriers.

For example, the first terminal apparatus may determine whether P4 is greater than or equal to P0 (P0 is a quantity of carriers on which the first terminal apparatus is capable of simultaneously sending or concurrently sending sidelink feedback data, and P0=2 is used as an example in this embodiment of this application). If P4 is less than or equal to P0, the P5 carriers determined by the first terminal apparatus are the P4 carriers, that is, P5=P4. If P4 is greater than P0, the P5 carriers determined by the first terminal apparatus include a part of the P4 carriers, that is, P5 is less than P4, and P5 may be equal to P0.

When P4 is greater than P0, the first terminal apparatus may determine the P5 carriers from the P4 carriers based on a plurality of possible parameters. For example, the first terminal apparatus may determine the P5 carriers from the P4 carriers according to at least one of the foregoing ① to ⑤. For specific implementation, refer to the foregoing descriptions of "determining the P3 carriers from the P1 carriers".

For example, the first terminal apparatus may determine the P5 carriers from the P4 carriers based on a priority of sidelink feedback data on each of the P4 carriers, where the P5 carriers include a part of or all of P41 carriers, the P41 carriers include a carrier on which highest-priority sidelink feedback data of the sidelink feedback data on the P4 carriers is located, and P41 is a positive integer.

The P5 carriers are a part of the P41 carriers, and P41 is greater than P5, where a quantity of pieces of highest-priority sidelink feedback data on any one of the P5 carriers is greater than a quantity of pieces of highest-priority sidelink feedback data on any one of the P41 carriers other than the P5 carriers; or when quantities of pieces of highest-priority sidelink feedback data on different carriers of the P41 carriers are the same, a priority of second-highest-priority sidelink feedback data on any one of the P5 carriers is higher than or equal to a priority of second-highest-priority sidelink feedback data on any one of the P41 carriers other than the P5 carriers. Alternatively, the P5 carriers include all of the P41 carriers, and further include a part of or all of P42 carriers, where the P42 carriers are carriers on which highest-priority sidelink feedback data of sidelink feedback data other than sidelink feedback data on the P41 carriers in the M4 pieces of sidelink feedback data is located, and P42 is a positive integer.

For another example, the first terminal apparatus determines the P5 carriers from the P4 carriers based on a quantity of pieces of sidelink feedback data that is on each of the P4 carriers and that is of the M4 pieces of sidelink feedback data, where a quantity of pieces of sidelink feedback data that is on any one of the P3 carriers and that is of the M4 pieces of sidelink feedback data is greater than or equal to a quantity of pieces of sidelink feedback data that is on any one of the P1 carriers other than the P3 carriers and that is of the M4 pieces of sidelink feedback data.

For another example, the first terminal apparatus determines the P5 carriers from the P4 carriers based on a channel busy ratio of each of the P4 carriers, where a channel busy ratio of any one of the P5 carriers is lower than or equal to a channel busy ratio of any one of the P4 carriers other than the P5 carriers.

For example, the first terminal apparatus determines the P5 carriers from the P4 carriers based on a quantity of pieces of sidelink feedback data on each of the P4 carriers (the quantity of pieces of sidelink feedback data on each carrier is a quantity of pieces of sidelink feedback data that is of the M4 pieces of sidelink feedback data and that is included on each carrier). On the P4 carriers, a quantity of pieces of sidelink feedback data on the carrier 1 is 2, a quantity of pieces of sidelink feedback data on the carrier 2 is 2, and a quantity of pieces of sidelink feedback data on the carrier 3 is 1. Therefore, the P5 carriers determined by the first terminal apparatus may include the carrier 1 and the carrier 2.

S4023-b: The first terminal apparatus sends the M2 pieces of sidelink feedback data of the M41 pieces of sidelink feedback data in the first time unit.

In a possible implementation, after determining the M41 pieces of sidelink feedback data, the first terminal apparatus may directly send the M41 pieces of sidelink feedback data, that is, M2=M41.

In another possible implementation, after determining the M41 pieces of sidelink feedback data, the first terminal apparatus may send the M2 pieces of sidelink feedback data of the M41 pieces of sidelink feedback data based on power control. For example, if a sum of preset transmit powers of the M41 pieces of sidelink feedback data is less than or equal to a maximum transmit power of sidelink feedback data supported by the first terminal apparatus, the M41 pieces of sidelink feedback data are sent, where M41 is equal to M2; or if a sum of preset transmit powers of the M41 pieces of sidelink feedback data is greater than a maximum transmit power of sidelink feedback data supported by the first terminal apparatus, the M2 pieces of sidelink feedback data of the M41 pieces of sidelink feedback data are sent, where M41 is greater than M2. A preset transmit power of each of the M41 pieces of sidelink feedback data is a preset transmit power corresponding to a carrier on which corresponding sidelink feedback data is located. It is assumed that the M41 pieces of sidelink feedback data are located on P22 carriers, and a preset transmit power corresponding to each of the P22 carriers may be a first power corresponding to a corresponding carrier; or a preset transmit power corresponding to each of the P22 carriers is a maximum value, a minimum value, an average value, or a median value of first powers corresponding to the P22 carriers. For specific implementation, refer to descriptions of "sending the M2 pieces of sidelink feedback data of the M31 pieces of sidelink feedback data based on power control" in S4023-a.

In Implementation 2, the first terminal apparatus first determines the M4 pieces of sidelink feedback data from the M1 pieces of sidelink feedback data based on the quantity of pieces of sidelink feedback data the first terminal apparatus is capable of sending in the first time unit (to satisfy a limitation on the quantity of pieces of sidelink feedback data). Then, the first terminal apparatus determines the P5 carriers from the P4 carriers based on the quantity of carriers on which the first terminal apparatus is capable of sending the sidelink feedback data in the first time unit (to satisfy a limitation on the quantity of carriers). Finally, the first terminal apparatus sends the M2 pieces of sidelink feedback data of the M41 pieces of sidelink feedback data based on power control. In this way, specific implementation of sidelink feedback and specific implementation of power control that are performed under a capability limitation of the first terminal apparatus are clarified, thereby improving sidelink communication efficiency while satisfying the capability limitation and the power limitation of the terminal apparatus.

The foregoing focuses on describing a difference between Implementation 1 and Implementation 2. For content excluding the difference, reference may be made to each other. In addition, Implementation 1 and Implementation 2 are merely two example manners. In another possible implementation, the first terminal apparatus may further first determine the M4 pieces of sidelink feedback data from the M1 pieces of sidelink feedback data based on the quantity of pieces of sidelink feedback data the first terminal apparatus is capable of sending in the first time unit (to satisfy a limitation on the quantity of pieces of sidelink feedback data). Then, the first terminal apparatus determines, based on power control, M5 pieces of sidelink feedback data from the M4 pieces of sidelink feedback data. Finally, the first terminal apparatus determines, based on the quantity of carriers on which the first terminal apparatus is capable of sending the sidelink feedback data in the first time unit, a part of or all of carriers among carriers on which the M5 pieces of sidelink feedback data are located (to satisfy a limitation on the quantity of carriers), and sends the M2 pieces of sidelink feedback data on the determined carriers (the M2 pieces of sidelink feedback data are a part of or all of the M5 pieces of sidelink feedback data).

Implementation 1 and Implementation 2 are applicable to a plurality of carrier aggregation scenarios. For example, when no PCC is configured for the first terminal apparatus (that is, the P1 carriers are not divided into primary carriers and secondary carriers), the first terminal apparatus may use Implementation 1 and Implementation 2. For another example, when a PCC is configured for the first terminal apparatus, but all the P1 carriers are secondary carriers (secondary component carriers, SCCs), the first terminal apparatus may use Implementation 1 and Implementation 2. When the PCC is configured for the first terminal apparatus, and the P1 carriers include the PCC and at least one SCC, the first terminal apparatus may use Implementation 3 or Implementation 4.

There are a plurality of manners for configuring the PCC for the first terminal apparatus. For example, a network device or another terminal apparatus may send configuration information to the first terminal apparatus, where the configuration information is used to configure the PCC, and the configuration information may be delivered by the network apparatus in a V2X transmission mode 1 (mode 1) manner, or may be sent by the another terminal apparatus by using PC5-RRC.

3. Implementation 3

In Implementation 3, it is assumed that the P1 carriers include one PCC and (P1-1) SCCs, and the first terminal apparatus is pre-configured to send sidelink feedback data on the PCC, but not send sidelink feedback data on the SCCs. In this case, referring to FIG. 7, S402 may include S4021-c to S4023-c.

S4021-c: The first terminal apparatus determines the PCC from the P1 carriers, where M11 pieces of sidelink feedback data of the M1 pieces of sidelink feedback data are located on the PCC.

The first terminal apparatus may determine the PCC from the P1 carriers based on carrier types (the carrier types are the PCCs or the SCCs) of the P1 carriers.

S4022-c: The first terminal apparatus determines M12 pieces of sidelink feedback data from the M11 pieces of sidelink feedback data.

For example, the first terminal apparatus may first determine whether M11 is greater than $N_{max,PSFCH}$. If M11 is less than or equal to $N_{max,PSFCH}$, the M12 pieces of sidelink feedback data determined by the first terminal apparatus are the M11 pieces of sidelink feedback data, that is, M11=M12. If M11 is greater than $N_{max,PSFCH}$, the M12 pieces of sidelink feedback data determined by the first terminal apparatus include a part of the M11 pieces of sidelink feedback data, that is, M12 is less than M11, and M12 may be equal to $N_{max,PSFCH}$.

When M11 is greater than $N_{max,PSFCH}$, the first terminal apparatus may determine the M12 pieces of sidelink feedback data from the M11 pieces of sidelink feedback data based on a plurality of possible parameters. For example, the first terminal apparatus may determine the M12 pieces of sidelink feedback data from the M11 pieces of sidelink feedback data according to at least one of the foregoing ⑥ and ⑦. For specific implementation, refer to the foregoing descriptions of "determining the M31 pieces of sidelink feedback data from the M3 pieces of sidelink feedback data".

S4023-c: The first terminal apparatus sends the M2 pieces of sidelink feedback data of the M12 pieces of sidelink feedback data in the first time unit.

In a possible implementation, after determining the M12 pieces of sidelink feedback data, the first terminal apparatus may directly send the M12 pieces of sidelink feedback data, that is, M2=M12.

In another possible implementation, after determining the M12 pieces of sidelink feedback data, the first terminal apparatus may send the M2 pieces of sidelink feedback data of the M12 pieces of sidelink feedback data based on power control. For specific implementation, refer to descriptions of "sending the M2 pieces of sidelink feedback data of the M31 pieces of sidelink feedback data based on power control" in S4023-a.

In Implementation 3, the first terminal apparatus first determines the PCC from the P1 carriers based on the carrier types. Then, the first terminal apparatus determines the M12 pieces of sidelink feedback data from the M11 pieces of sidelink feedback data based on the quantity of pieces of sidelink feedback data the first terminal apparatus is capable of sending in the first time unit (to satisfy a limitation on the quantity of pieces of sidelink feedback data). Finally, the first terminal apparatus sends the M2 pieces of sidelink feedback data of the M12 pieces of sidelink feedback data based on power control. In this way, specific implementation of sidelink feedback and specific implementation of power control that are performed under a capability limitation of the first terminal apparatus are clarified, thereby improving sidelink communication efficiency while satisfying the capability limitation and the power limitation of the terminal apparatus.

4. Implementation 4

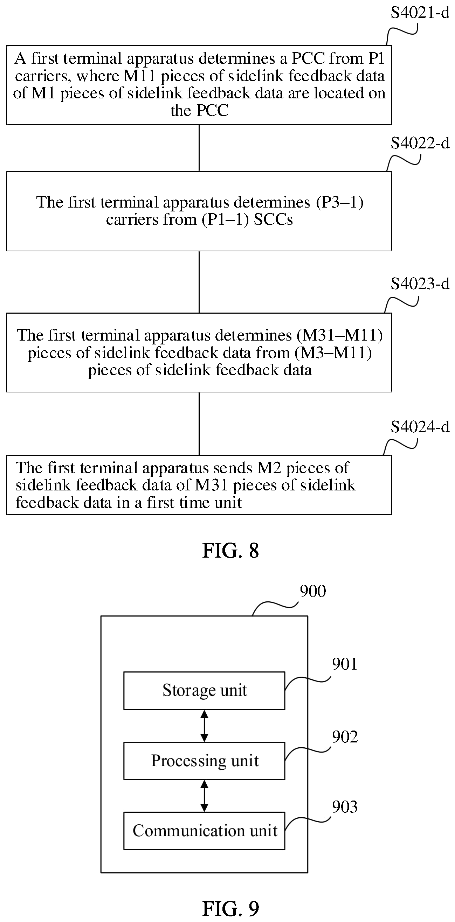

In Implementation 4, it is assumed that the P1 carriers include one PCC and (P1-1) SCCs. In this case, referring to FIG. 8, S402 may include S4021-d to S4023-d.

S4021-d: The first terminal apparatus determines the PCC from the P1 carriers, where M11 pieces of sidelink feedback data of the M1 pieces of sidelink feedback data are located on the PCC.

The first terminal apparatus may determine the PCC from the P1 carriers based on carrier types (the carrier types are the PCCs or the SCCs) of the P1 carriers.

Further, if a quantity of PCCs determined by the first terminal apparatus is less than P0, but M11 is greater than or equal to $N_{max,PSFCH}$, S4022-c and S4023-c in Implementation 3 may be performed. If a quantity of PCCs determined by the first terminal apparatus is less than P0 (P0 is a quantity of carriers on which the first terminal apparatus is capable of sending sidelink feedback data in the first time unit), and M11 is less than $N_{max,PSFCH}$, S4022-d to S4024-d may continue to be performed.

S4022-d: The first terminal apparatus determines (P3-1) carriers from the (P1-1) SCCs.

M3 pieces of sidelink feedback data of the M1 pieces of sidelink feedback data are located on the PCC and the (P3-1) SCCs, the M11 pieces of sidelink feedback data are located on the PCC, and (M3-M11) pieces of sidelink feedback data are located on the (P3-1) SCCs.

For example, for specific implementation of determining, by the first terminal apparatus, the (P3-1) carriers from the (P1-1) SCCs, refer to specific implementation of "determining the P3 carriers from the P1 carriers" in Implementation 1.

S4023-d: The first terminal apparatus determines (M31-M11) pieces of sidelink feedback data from the (M3-M11) pieces of sidelink feedback data.

For example, for specific implementation of determining, by the first terminal apparatus, the (M31-M11) pieces of sidelink feedback data from the (M3-M11) pieces of sidelink feedback data, refer to specific implementation of "determining the M31 pieces of sidelink feedback data from the M3 pieces of sidelink feedback data" in Implementation 1.

S4024-d: The first terminal apparatus sends the M2 pieces of sidelink feedback data of the M31 pieces of sidelink feedback data in the first time unit.

The M31 pieces of sidelink feedback data include the M11 pieces of sidelink feedback data on the PCC and the (M31-M11) pieces of sidelink feedback data on the SCC.

In a possible implementation, after determining the M31 pieces of sidelink feedback data, the first terminal apparatus may directly send the M31 pieces of sidelink feedback data, that is, M2=M31.

In another possible implementation, after determining the M31 pieces of sidelink feedback data, the first terminal apparatus may send the M2 pieces of sidelink feedback data of the M31 pieces of sidelink feedback data based on power control. For specific implementation, refer to descriptions in S4023-a. Alternatively, in another possible example, when determining the M2 pieces of sidelink feedback data from the M31 pieces of sidelink feedback data based on power control, the first terminal apparatus may preferentially select the sidelink feedback data on the PCC.

In Implementation 4, the first terminal apparatus may preferentially send the sidelink feedback data on the PCC in the first time unit. If the first terminal apparatus has a remaining capability, the first terminal apparatus may determine to send some sidelink feedback data on the SCC. In this way, specific implementation of sidelink feedback and specific implementation of power control that are performed under a capability limitation of the first terminal apparatus are clarified, thereby improving sidelink communication efficiency while satisfying the capability limitation and the power limitation of the terminal apparatus.

It may be understood that, Implementation 4 is a variant based on Implementation 1, and Implementation 4 may also be a variant based on Implementation 2 or another implementation. In other words, in a scenario in which the PCC is configured, the PCC and the sidelink feedback data on the PCC may be first determined from the P1 carriers, and then some sidelink feedback data on the SCC is determined based on a remaining capability limitation of the terminal apparatus (for example, a quantity of pieces of remaining sidelink feedback data is limited to M0-M11, and a quantity of remaining carriers is limited to P0-1). For a specific manner, refer to Implementation 1, Implementation 2, or another implementation. Details are not described again.

For the foregoing embodiments, it may be understood that:

(1) In the foregoing embodiments, the first terminal apparatus receives the M1 pieces of sidelink data, and needs to send, in the first time unit, the M1 pieces of sidelink feedback data corresponding to the M1 pieces of sidelink data. However, due to a capability limitation, a power limitation, and the like of the first terminal apparatus, the first terminal apparatus sends the M2 pieces of sidelink feedback data in the first time unit. Optionally, when M2 is less than M1, another piece of sidelink feedback data of the M1 pieces of sidelink feedback data other than the M2 pieces of sidelink feedback data may be sent on a subsequent PSFCH resource, or may not be fed back (that is, discarded).

For example, in an unlicensed band SL CA scenario, there may be a one-to-many mapping relationship between a PSCCH/PSSCH and a PSFCH, that is, sidelink feedback data corresponding to sidelink data may correspond to a plurality of PSFCH resources. Using sidelink feedback data a in the M1 pieces of sidelink feedback data other than the M2 pieces of sidelink feedback data as an example, if the sidelink feedback data a corresponds to the plurality of PSFCH resources, for example, the sidelink feedback data a may be located in the first time unit and a third time unit after the first time unit, the first terminal apparatus may first consider that the sidelink feedback data a is sidelink feedback data that needs to be sent in the first time unit. When the first terminal apparatus does not send the sidelink feedback data a in the first time unit due to the capability limitation and the power limitation, the first terminal apparatus may consider that the sidelink feedback data a is sidelink feedback data that needs to be sent in the third time unit, to attempt to send the sidelink feedback data a in the third time unit.

(2) A capability of the first terminal apparatus in this embodiment of this application, for example, a quantity of pieces of sidelink feedback data the first terminal apparatus is capable of sending in the first time unit, or a quantity of carriers on which the first terminal apparatus is capable of sending sidelink feedback data in the first time unit, may be configured by a network apparatus or another terminal apparatus for the first terminal apparatus, or may be predefined or pre-configured.

(3) The foregoing focuses on describing a difference between different implementations or different examples. For content excluding the difference, reference may be made between different implementations or different examples. In addition, different implementations or different examples may be partially implemented, or may be combined for implementation, or may be partially combined for implementation. Details are not listed one by one in this embodiment of this application.

(4) Step numbers in each flowchart described in the foregoing embodiments are merely a procedure execution example, and do not constitute a limitation on a step execution sequence. In embodiments of this application, there is no strict execution sequence between steps having no time sequence dependence relationship with each other. In addition, not all steps shown in the flowcharts are mandatory steps. Some steps may be added or deleted based on the flowcharts based on an actual requirement, or only some steps included in the flowcharts may be performed.

The foregoing mainly describes the solutions provided in embodiments of this application from a perspective of interaction between terminal apparatuses. It may be understood that, to implement the foregoing functions, the network device and the terminal device may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal apparatus may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

When the integrated unit is used, FIG. 9 is a possible example block diagram of an apparatus according to an embodiment of this application. As shown in FIG. 9, an apparatus 900 may include a processing unit 902 and a communication unit 903. The processing unit 902 is configured to control and manage an action of the apparatus 900. The communication unit 903 is configured to support communication between the apparatus 900 and another device. Optionally, the communication unit 903 is also referred to as a transceiver unit, and may include a receiving unit and/or a sending unit, respectively configured to perform a receiving operation and a sending operation. The apparatus 900 may further include a storage unit 901 that is configured to store program code and/or data of the apparatus 900.

The apparatus 900 may be the terminal apparatus in the foregoing embodiments. The processing unit 902 may support the apparatus 900 performing actions of the terminal apparatus in the foregoing method examples. Alternatively, the processing unit 902 mainly performs an internal action of the terminal apparatus in the method examples, and the communication unit 903 may support communication between the apparatus 900 and another device.

For example, in an embodiment, the communication unit 903 is configured to: receive M1 pieces of sidelink data, where the M1 pieces of sidelink data are located on P1 carriers, sidelink feedback data corresponding to each of the M1 pieces of sidelink data and corresponding sidelink data are located on a same carrier, and M1 pieces of sidelink feedback data corresponding to the M1 pieces of sidelink data are located in a first time unit; and send M2 pieces of sidelink feedback data of the M1 pieces of sidelink feedback data in the first time unit, where the M2 pieces of sidelink feedback data are located on P2 carriers; M2 is less than or equal to a quantity of pieces of sidelink feedback data the first terminal apparatus is capable of sending in the first time unit, P2 is less than or equal to P1, and P2 is less than or equal to a quantity of carriers on which the first terminal apparatus is capable of sending sidelink feedback data in the first time unit; and M1, M2, P1, and P2 are positive integers, and M1 is greater than or equal to M2.

In a possible implementation, the processing unit 902 is configured to: determine P3 carriers from the P1 carriers, where M3 pieces of sidelink feedback data of the M1 pieces of sidelink feedback data are located on the P3 carriers; and determine M31 pieces of sidelink feedback data from the M3 pieces of sidelink feedback data; and the communication unit 903 is specifically configured to: send the M2 pieces of sidelink feedback data of the M31 pieces of sidelink feedback data in the first time unit, where P3, M3, and M31 are positive integers, P1 is greater than or equal to P3, P3 is greater than or equal to P2, M1 is greater than or equal to M3, M3 is greater than or equal to M31, and M31 is greater than or equal to M2.

In a possible implementation, the processing unit 902 is specifically configured to: determine the P3 carriers from the P1 carriers based on a priority of sidelink feedback data on each of the P1 carriers, where the P3 carriers include a part of or all of P31 carriers, the P31 carriers include a carrier on which highest-priority sidelink feedback data of the M1 sidelink feedback data is located, and P31 is a positive integer.

In a possible implementation, the P3 carriers are a part of the P31 carriers, and P31 is greater than P3, where a quantity of pieces of highest-priority sidelink feedback data on any one of the P3 carriers is greater than a quantity of pieces of highest-priority sidelink feedback data on any one of the P31 carriers other than the P3 carriers; or when quantities of pieces of highest-priority sidelink feedback data on different carriers of the P31 carriers are the same, a priority of second-highest-priority sidelink feedback data on any one of the P3 carriers is higher than or equal to a priority of second-highest-priority sidelink feedback data on any one of the P31 carriers other than the P3 carriers.

In a possible implementation, the P3 carriers include all of the P31 carriers, and further include a part of or all of P32 carriers, where the P32 carriers are carriers on which highest-priority sidelink feedback data of sidelink feedback data other than sidelink feedback data on the P31 carriers in the M1 pieces of sidelink feedback data is located, and P32 is a positive integer.

In a possible implementation, the processing unit 902 is specifically configured to: determine the P3 carriers from the P1 carriers based on a quantity of pieces of sidelink feedback data on each of the P1 carriers, where a quantity of pieces of sidelink feedback data on any one of the P3 carriers is greater than or equal to a quantity of pieces of sidelink feedback data on any one of the P1 carriers other than the P3 carriers.

In a possible implementation, the processing unit 902 is specifically configured to: determine the P3 carriers from the P1 carriers based on a quantity of second terminal apparatuses that correspond to sidelink feedback data on each of the P1 carriers, where a quantity of second terminal apparatuses that correspond to sidelink feedback data on any one of the P3 carriers is greater than or equal to a quantity of second terminal apparatuses that correspond to the sidelink feedback data on any one of the P1 carriers other than the P3 carriers, and the sidelink feedback data on each carrier is from the second terminal apparatus corresponding to the sidelink feedback data on the corresponding carrier.

In a possible implementation, the processing unit 902 is specifically configured to: determine the P3 carriers from the P1 carriers based on a quantity of pieces of sidelink feedback data that is capable of being sent on each of the P1 carriers in the first time unit, where a quantity of pieces of sidelink feedback data that is capable of being sent on any one of the P3 carriers in the first time unit is greater than or equal to a quantity of pieces of sidelink feedback data that is capable of being sent on any one of the P1 carriers other than the P3 carriers in the first time unit.

In a possible implementation, the processing unit 902 is specifically configured to: determine the P3 carriers from the P1 carriers based on a channel busy ratio of each of the P1 carriers, where a channel busy ratio of any one of the P3 carriers is lower than or equal to a channel busy ratio of any one of the P1 carriers other than the P3 carriers.

In a possible implementation, the processing unit 902 is specifically configured to: determine the M31 pieces of sidelink feedback data from the M3 pieces of sidelink feedback data based on priorities of the M3 pieces of sidelink feedback data, where priorities of the M31 pieces of sidelink feedback data are higher than or equal to a priority of another piece of sidelink feedback data of the M3 pieces of sidelink feedback data other than the M31 pieces of sidelink feedback data.

In a possible implementation, the processing unit 902 is specifically configured to: determine M31 pieces of sidelink data from the M3 pieces of sidelink data based on receiving time of the M3 pieces of sidelink data, where the M31 pieces of sidelink feedback data correspond to the M31 pieces of sidelink data, and receiving time of the M31 pieces of sidelink data is earlier than or equal to receiving time of another piece of sidelink data of the M3 pieces of sidelink data other than the M31 pieces of sidelink data.

In a possible implementation, the communication unit 903 is specifically configured to: if a sum of preset transmit powers of the M31 pieces of sidelink feedback data is less than or equal to a maximum transmit power of sidelink feedback data that is supported by the first terminal apparatus, send the M31 pieces of sidelink feedback data, where M31 is equal to M2; or if a sum of preset transmit powers of the M31 pieces of sidelink feedback data is greater than a maximum transmit power of sidelink feedback data that is supported by the first terminal apparatus, send the M2 pieces of sidelink feedback data of the M31 pieces of sidelink feedback data, where M31 is greater than M2, where a preset transmit power of each of the M31 pieces of sidelink feedback data is a preset transmit power corresponding to a carrier on which corresponding sidelink feedback data is located.

In a possible implementation, the M31 pieces of sidelink feedback data are located on P21 carriers, and P21 is a positive integer; a preset transmit power corresponding to each of the P21 carriers is a first power corresponding to a corresponding carrier; or a preset transmit power corresponding to each of the P21 carriers is a maximum value, a minimum value, an average value, or a median value of first powers corresponding to the P21 carriers.

In a possible implementation, M3 is greater than or equal to the quantity of pieces of sidelink feedback data the first terminal apparatus is capable of sending in the first time unit.

In a possible implementation, the processing unit 902 is configured to: determine M4 pieces of sidelink feedback data from the M1 pieces of sidelink feedback data, where the M4 pieces of sidelink feedback data are located on P4 carriers; and determine the P5 carriers from the P4 carriers, where M41 pieces of sidelink feedback data of the M4 pieces of sidelink feedback data are located on the P5 carriers; and the communication unit 903 is specifically configured to: send M2 pieces of sidelink feedback data of the M41 pieces of sidelink feedback data in the first time unit, where M4, M41, P4, and P5 are positive integers, P4 is greater than or equal to P5, M4 is greater than or equal to M41, and M41 is greater than or equal to M2.

In a possible implementation, the processing unit 902 is configured to: determine the M4 pieces of sidelink feedback data from the M1 pieces of sidelink feedback data based on priorities of the M1 pieces of sidelink feedback data, where priorities of the M4 pieces of sidelink feedback data are higher than or equal to a priority of another piece of sidelink feedback data of the M1 pieces of sidelink feedback data other than the M4 pieces of sidelink feedback data.

In a possible implementation, the processing unit 902 is configured to: determine M4 pieces of sidelink data from the M1 pieces of sidelink data based on receiving time of the M1 pieces of sidelink data, where the M4 pieces of sidelink feedback data correspond to the M4 pieces of sidelink data, and receiving time of the M4 pieces of sidelink data is earlier than or equal to receiving time of another piece of sidelink data of the M1 pieces of sidelink data other than the M4 pieces of sidelink data.

In a possible implementation, the processing unit 902 is configured to: determine the P5 carriers from the P4 carriers based on a priority of sidelink feedback data on each of the P4 carriers, where the P5 carriers include a part of or all of P41 carriers, the P41 carriers include a carrier on which highest-priority sidelink feedback data of the sidelink feedback data on the P4 carriers is located, and P41 is a positive integer.

In a possible implementation, the P5 carriers are a part of the P41 carriers, and P41 is greater than P5, where a quantity of pieces of highest-priority sidelink feedback data on any one of the P5 carriers is greater than a quantity of pieces of highest-priority sidelink feedback data on any one of the P41 carriers other than the P5 carriers; or when quantities of pieces of highest-priority sidelink feedback data on different carriers of the P41 carriers are the same, a priority of second-highest-priority sidelink feedback data on any one of the P5 carriers is higher than or equal to a priority of second-highest-priority sidelink feedback data on any one of the P41 carriers other than the P5 carriers.

In a possible implementation, the P5 carriers include all of the P41 carriers, and further include a part of or all of P42 carriers, where the P42 carriers are carriers on which highest-priority sidelink feedback data of sidelink feedback data other than sidelink feedback data on the P41 carriers in the M4 pieces of sidelink feedback data is located, and P42 is a positive integer.

In a possible implementation, the processing unit 902 is configured to: determine the P5 carriers from the P4 carriers based on a quantity of pieces of sidelink feedback data that is on each of the P4 carriers and that is of the M4 pieces of sidelink feedback data, where a quantity of pieces of sidelink feedback data that is on any one of the P5 carriers and that is of the M4 pieces of sidelink feedback data is greater than or equal to a quantity of pieces of sidelink feedback data that is on any one of the P4 carriers other than the P5 carriers and that is of the M4 pieces of sidelink feedback data.

In a possible implementation, the processing unit 902 is configured to: determine the P5 carriers from the P4 carriers based on a channel busy ratio of each of the P1 carriers, where a channel busy ratio of any one of the P5 carriers is lower than or equal to a channel busy ratio of any one of the P4 carriers other than the P5 carriers.

In a possible implementation, the communication unit 903 is specifically configured to: if a sum of preset transmit powers of the M41 pieces of sidelink feedback data is less than or equal to a maximum transmit power of sidelink feedback data that is supported by the first terminal apparatus, send the M41 pieces of sidelink feedback data, where M41 is equal to M2; or if a sum of preset transmit powers of the M41 pieces of sidelink feedback data is greater than a maximum transmit power of sidelink feedback data that is supported by the first terminal apparatus, send the M2 pieces of sidelink feedback data of the M41 pieces of sidelink feedback data, where M41 is greater than M2, where a preset transmit power of each of the M41 pieces of sidelink feedback data is a preset transmit power corresponding to a carrier on which corresponding sidelink feedback data is located.

In a possible implementation, the M41 pieces of sidelink feedback data are located on P22 carriers, and P22 is a positive integer; a preset transmit power corresponding to each of the P22 carriers is a first power corresponding to a corresponding carrier; or a preset transmit power corresponding to each of the P22 carriers is a maximum value, a minimum value, an average value, or a median value of first powers corresponding to the P22 carriers.

In a possible implementation, P4 is greater than or equal to the quantity of carriers on which the first terminal apparatus is capable of sending the sidelink feedback data in the first time unit.

In a possible implementation, all the P1 carriers are secondary carriers of the first terminal apparatus.

In a possible implementation, the P1 carriers include a primary carrier and a secondary carrier of the first terminal apparatus; and the P2 carriers are primary carriers in the P1 carriers, or the P2 carriers include a primary carrier and at least one secondary carrier in the P1 carriers.

It should be understood that, unit division in the foregoing apparatus is merely logical function division. In actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element invokes a program, the processing element may be a processor, for example, a general-purpose central processing unit (central processing unit, CPU) or another processor that can invoke the program. For another example, these units may be integrated together and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

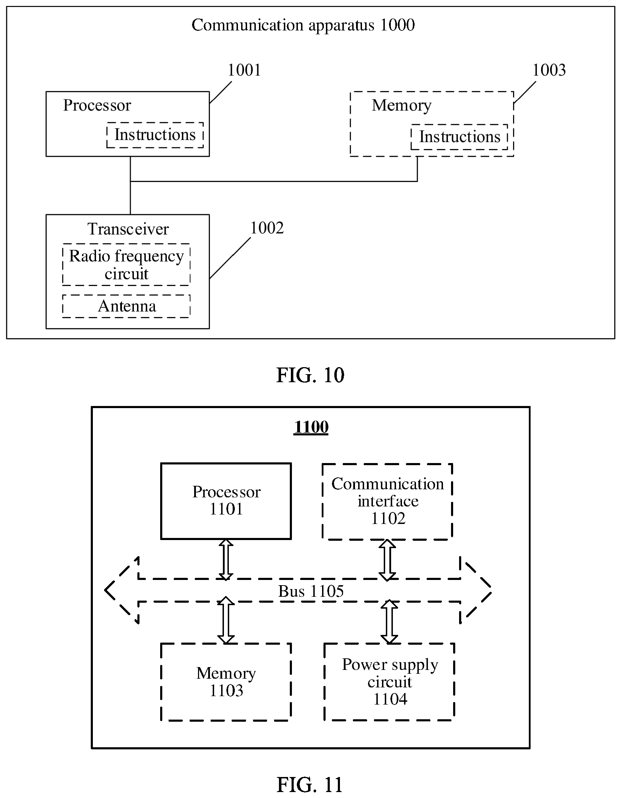

In another possible product form, the first terminal apparatus, the second terminal apparatus, a third terminal apparatus, a fourth terminal apparatus, a fifth terminal apparatus, or a sixth terminal apparatus in embodiments of this application may be implemented by using a general bus architecture. For ease of description, refer to FIG. 10. FIG. 10 is a diagram of a structure of a communication apparatus 1000 according to an embodiment of this application. The communication apparatus 1000 includes a processor 1001 and a transceiver 1002. The communication apparatus 1000 may be a first terminal apparatus, or a chip or a chip system in the first terminal apparatus; or the communication apparatus 1000 may be a second terminal apparatus, or a chip or a module in the second terminal apparatus; or the communication apparatus 1000 may be a third terminal apparatus, or a chip or a module in the third terminal apparatus; or the communication apparatus 1000 may be a fourth terminal apparatus, or a chip or a module in the fourth terminal apparatus; or the communication apparatus 1000 may be a fifth terminal apparatus, or a chip or a module in the fifth terminal apparatus; or the communication apparatus 1000 may be a sixth terminal apparatus, or a chip or a module in the sixth terminal apparatus. FIG. 10 shows only main components in the communication apparatus 1000. In addition to a processor 1001 and a transceiver 1002, the communication apparatus 1000 may further include a memory 1003 and an input/output apparatus (not shown in the figure).

Optionally, the processor 1001 is mainly configured to: process a communication protocol and communication data, control the entire communication apparatus, execute a software program, and process data of the software program. The memory 1003 is mainly configured to store the software program and data. The transceiver 1002 may include a radio frequency circuit and an antenna. The radio frequency circuit is mainly configured to perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 1001, the transceiver 1002, and the memory 1003 may be connected via a communication bus.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 900 may be in a form of the communication apparatus 1000 shown in FIG. 10.

In an example, a function/implementation process of the processing unit 902 in FIG. 9 may be implemented by the processor 1001 in the communication apparatus 1000 shown in FIG. 10 by invoking the computer-executable instructions stored in the memory 1003. A function/implementation process of the communication unit 903 in FIG. 9 may be implemented by using the transceiver 1002 in the communication apparatus 1000 shown in FIG. 10.

In another possible product form, the first terminal apparatus, the second terminal apparatus, a third terminal apparatus, a fourth terminal apparatus, a fifth terminal apparatus, or a sixth terminal apparatus in this application may use a composition structure shown in FIG. 11, or include components shown in FIG. 11. FIG. 11 is a composition diagram of a communication apparatus 1100 according to this application.

As shown in FIG. 11, the communication apparatus 1100 includes at least one processor 1101. Optionally, the communication apparatus further includes a communication interface 1102.

When related program instructions are executed in the at least one processor 1101, the apparatus 1100 may be enabled to implement the method provided in any one of the foregoing embodiments and any possible design thereof. Alternatively, the processor 1101 is configured to implement, by using a logic circuit or by executing code instructions, the method provided in any one of the foregoing embodiments and any possible design thereof.

The communication interface 1102 may be configured to receive the program instructions, and transmit the program instructions to the processor. Alternatively, the communication interface 1102 may be configured to perform communication interaction between the communication apparatus 1100 and another communication device, for example, exchange control signaling and/or service data. For example, the communication interface 1102 may be configured to receive a signal from an apparatus other than the communication apparatus 1100, and transmit the signal to the processor 1101; or send a signal from the processor 1101 to a communication apparatus other than the communication apparatus 1100.

Optionally, the communication interface 1102 may be a code and/or data read/write interface circuit, or the communication interface 1102 may be a signal transmission interface circuit between a communication processor and a transceiver, or may be a pin of a chip.

Optionally, the communication apparatus 1100 may further include at least one memory 1103, and the memory 1103 may be configured to store the related program instructions and/or data that are/is required. It should be noted that, the memory 1103 may be independent of the processor 1101, or may be integrated with the processor 1101. The memory 1103 may be located inside the communication apparatus 1100, or may be located outside the communication apparatus 1100. This is not limited.

Optionally, the communication apparatus 1100 may further include a power supply circuit 1104, and the power supply circuit 1104 may be configured to supply power to the processor 1101. The power supply circuit 1104 may be located in a same chip as the processor 1101, or may be located in a chip other than a chip in which the processor 1101 is located.

Optionally, the communication apparatus 1100 may further include a bus 1105, and parts of the communication apparatus 1100 may be interconnected through the bus 1105.

In some embodiments, in hardware implementation, a person skilled in the art may figure out that the communication apparatus 900 shown in FIG. 9 may be in a form of the communication apparatus 1100 shown in FIG. 11.

In an example, a function/implementation process of the processing unit 902 in FIG. 9 may be implemented by the processor 1101 in the communication apparatus 1100 shown in FIG. 11 by invoking the computer-executable instructions stored in the memory 1103. A function/implementation process of the communication unit 903 in FIG. 9 may be implemented by the communication interface 1102 in the communication apparatus 1100 shown in FIG. 11.

It should be noted that, the structure shown in FIG. 11 does not constitute a specific limitation on the first terminal apparatus, the second terminal apparatus, the third terminal apparatus, the fourth terminal apparatus, the fifth terminal apparatus, or the sixth terminal apparatus. For example, in some other embodiments of this application, the first terminal apparatus, the second terminal apparatus, the third terminal apparatus, the fourth terminal apparatus, the fifth terminal apparatus, or the sixth terminal apparatus may include more or fewer components than those shown in the figure, or combine some components, or split some components, or have different component arrangements. The components shown in the figure may be implemented by hardware, software, or a combination of software and hardware.

Optionally, in this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The terms "system" and "network" may be used interchangeably in embodiments of this application. "At least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

A person skilled in the art should understand that, embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

**Claims**

1. A communication method, wherein the method is applied to a first terminal apparatus, and the method comprises:

   receiving M1 pieces of sidelink data, wherein the M1 pieces of sidelink data are located on P1 carriers, sidelink feedback data corresponding to each of the M1 pieces of sidelink data and corresponding sidelink data are located on a same carrier, and M1 pieces of sidelink feedback data corresponding to the M1 pieces of sidelink data are located in a first time unit; and
   sending M2 pieces of sidelink feedback data of the M1 pieces of sidelink feedback data in the first time unit, wherein
   the M2 pieces of sidelink feedback data are located on P2 carriers; M2 is less than or equal to a quantity of pieces of sidelink feedback data the first terminal apparatus is capable of sending in the first time unit, P2 is less than or equal to P1, and P2 is less than or equal to a quantity of carriers on which the first terminal apparatus is capable of sending sidelink feedback data in the first time unit; and M1, M2, P1, and P2 are positive integers, and M1 is greater than or equal to M2.

2. The method according to claim 1, wherein sending the M2 pieces of sidelink feedback data of the M1 pieces of sidelink feedback data in the first time unit comprises:

   determining P3 carriers from the P1 carriers, wherein M3 pieces of sidelink feedback data of the M1 pieces of sidelink feedback data are located on the P3 carriers;
   determining M31 pieces of sidelink feedback data from the M3 pieces of sidelink feedback data; and
   sending the M2 pieces of sidelink feedback data of the M31 pieces of sidelink feedback data in the first time unit, wherein
   P3, M3, and M31 are positive integers, P1 is greater than or equal to P3, P3 is greater than or equal to P2, M1 is greater than or equal to M3, M3 is greater than or equal to M31, and M31 is greater than or equal to M2.

3. The method according to claim 2, wherein determining the P3 carriers from the P1 carriers comprises:

   determining the P3 carriers from the P1 carriers based on a priority of the sidelink feedback data on each of the P1 carriers, wherein
   the P3 carriers comprise a part of or all of P31 carriers, the P31 carriers comprise a carrier on which highest-priority sidelink feedback data of the M1 sidelink feedback data is located, and P31 is a positive integer.

4. The method according to claim 3, wherein the P3 carriers are a part of the P31 carriers, and P31 is greater than P3, wherein

a quantity of pieces of highest-priority sidelink feedback data on any one of the P3 carriers is greater than a quantity of pieces of highest-priority sidelink feedback data on any one of the P31 carriers other than the P3 carriers; or

when quantities of pieces of highest-priority sidelink feedback data on different carriers of the P31 carriers are the same, a priority of second-highest-priority sidelink feedback data on any one of the P3 carriers is higher than or equal to a priority of second-highest-priority sidelink feedback data on any one of the P31 carriers other than the P3 carriers.

5. The method according to claim 3, wherein the P3 carriers comprise all of the P31 carriers, and further comprise a part of or all of P32 carriers, wherein

the P32 carriers are carriers on which highest-priority sidelink feedback data of sidelink feedback data other than sidelink feedback data on the P31 carriers in the M1 pieces of sidelink feedback data is located, and P32 is a positive integer.

6. The method according to claim 2, wherein determining the P3 carriers from the P1 carriers comprises:

determining the P3 carriers from the P1 carriers based on a quantity of pieces of sidelink feedback data on each of the P1 carriers, wherein

a quantity of pieces of sidelink feedback data on any one of the P3 carriers is greater than or equal to a quantity of pieces of sidelink feedback data on any one of the P1 carriers other than the P3 carriers.

7. The method according to claim 2, wherein determining the P3 carriers from the P1 carriers comprises:

determining the P3 carriers from the P1 carriers based on a quantity of second terminal apparatuses that correspond to sidelink feedback data on each of the P1 carriers, wherein

a quantity of second terminal apparatuses that correspond to the sidelink feedback data on any one of the P3 carriers is greater than or equal to a quantity of second terminal apparatuses that correspond to the sidelink feedback data on any one of the P1 carriers other than the P3 carriers, and a second terminal apparatus corresponding to the sidelink feedback data is configured to receive the sidelink feedback data.

8. The method according to claim 2, wherein determining the P3 carriers from the P1 carriers comprises:

determining the P3 carriers from the P1 carriers based on a quantity of pieces of sidelink feedback data that is capable of being sent on each of the P1 carriers in the first time unit, wherein

a quantity of pieces of sidelink feedback data that is capable of being sent on any one of the P3 carriers in the first time unit is greater than or equal to a quantity of pieces of sidelink feedback data that is capable of being sent on any one of the P1 carriers other than the P3 carriers in the first time unit.

9. The method according to claim 2, wherein determining the P3 carriers from the P1 carriers comprises:

determining the P3 carriers from the P1 carriers based on a channel busy ratio of each of the P1 carriers, wherein

a channel busy ratio of any one of the P3 carriers is lower than or equal to a channel busy ratio of any one of the P1 carriers other than the P3 carriers.

10. The method according to any one of claims 2 to 9, wherein determining the M31 pieces of sidelink feedback data from the M3 pieces of sidelink feedback data comprises:

determining the M31 pieces of sidelink feedback data from the M3 pieces of sidelink feedback data based on priorities of the M3 pieces of sidelink feedback data, wherein priorities of the M31 pieces of sidelink feedback data are higher than or equal to a priority of another piece of sidelink feedback data of the M3 pieces of sidelink feedback data other than the M31 pieces of sidelink feedback data.

11. The method according to any one of claims 2 to 9, wherein determining the M31 pieces of sidelink feedback data from the M3 pieces of sidelink feedback data comprises:

determining M31 pieces of sidelink data from M3 pieces of sidelink data based on receiving time of the M3 pieces of sidelink data, wherein the M31 pieces of sidelink feedback data correspond to the M31 pieces of sidelink data, and receiving time of the M31 pieces of sidelink data is earlier than or equal to receiving time of another piece of sidelink data of the M3 pieces of sidelink data other than the M31 pieces of sidelink data.

12. The method according to any one of claims 2 to 11, wherein sending the M2 pieces of sidelink feedback data of the M31 pieces of sidelink feedback data comprises:

if a sum of preset transmit powers of the M31 pieces of sidelink feedback data is less than or equal to a maximum transmit power of sidelink feedback data that is supported by the first terminal apparatus, sending the M31 pieces of sidelink feedback data, wherein M31 is equal to M2; or
if a sum of preset transmit powers of the M31 pieces of sidelink feedback data is greater than a maximum transmit power of sidelink feedback data that is supported by the first terminal apparatus, sending the M2 pieces of sidelink feedback data of the M31 pieces of sidelink feedback data, wherein M31 is greater than M2, wherein
a preset transmit power of each of the M31 pieces of sidelink feedback data is a preset transmit power corresponding to a carrier on which corresponding sidelink feedback data is located.

13. The method according to claim 12, wherein the M31 pieces of sidelink feedback data are located on P21 carriers, P21 is a positive integer, P3 is greater than or equal to P21, and P21 is greater than or equal to P2;

a preset transmit power corresponding to each of the P21 carriers is a first power corresponding to a corresponding carrier; or
a preset transmit power corresponding to each of the P21 carriers is a maximum value, a minimum value, an average value, or a median value of first powers corresponding to the P21 carriers.

14. The method according to any one of claims 2 to 13, wherein M3 is greater than or equal to the quantity of pieces of sidelink feedback data the first terminal apparatus is capable of sending in the first time unit.

15. The method according to claim 1, wherein sending the M2 pieces of sidelink feedback data of the M1 pieces of sidelink feedback data in the first time unit comprises:

determining M4 pieces of sidelink feedback data from the M1 pieces of sidelink feedback data, wherein the M4 pieces of sidelink feedback data are located on P4 carriers;
determining P5 carriers from the P4 carriers, wherein M41 pieces of sidelink feedback data of the M4 pieces of sidelink feedback data are located on the P5 carriers; and
sending M2 pieces of sidelink feedback data of the M41 pieces of sidelink feedback data in the first time unit, wherein
M4, M41, P4, and P5 are positive integers, P4 is greater than or equal to P5, M4 is greater than or equal to M41, and M41 is greater than or equal to M2.

16. The method according to claim 15, wherein determining the M4 pieces of sidelink feedback data from the M1 pieces of sidelink feedback data comprises:
determining the M4 pieces of sidelink feedback data from the M1 pieces of sidelink feedback data based on priorities of the M1 pieces of sidelink feedback data, wherein priorities of the M4 pieces of sidelink feedback data are higher than or equal to a priority of another piece of sidelink feedback data of the M1 pieces of sidelink feedback data other than the M4 pieces of sidelink feedback data.

17. The method according to claim 16, wherein determining the M4 pieces of sidelink feedback data from the M1 pieces of sidelink feedback data comprises:
determining M4 pieces of sidelink data from the M1 pieces of sidelink data based on receiving time of the M1 pieces of sidelink data, wherein the M4 pieces of sidelink feedback data correspond to the M4 pieces of sidelink data, and receiving time of the M4 pieces of sidelink data is earlier than or equal to receiving time of another piece of sidelink data of the M1 pieces of sidelink data other than the M4 pieces of sidelink data.

18. The method according to any one of claims 15 to 17, wherein determining the P5 carriers from the P4 carriers comprises:

determining the P5 carriers from the P4 carriers based on a priority of sidelink feedback data on each of the P4 carriers, wherein
the P5 carriers comprise a part of or all of P41 carriers, the P41 carriers comprise a carrier on which highest-priority sidelink feedback data of sidelink feedback data on the P4 carriers is located, and P41 is a positive integer.

19. The method according to claim 18, wherein the P5 carriers are a part of the P41 carriers, and P41 is greater than P5, wherein

a quantity of pieces of highest-priority sidelink feedback data on any one of the P5 carriers is greater than a quantity of pieces of highest-priority sidelink feedback data on any one of the P41 carriers other than the P5 carriers; or
when quantities of pieces of highest-priority sidelink feedback data on different carriers of the P41 carriers are the same, a priority of second-highest-priority sidelink feedback data on any one of the P5 carriers is higher than or equal to a priority of second-highest-priority sidelink feedback data on any one of the P41 carriers other than the P5 carriers.

20. The method according to claim 18, wherein the P5 carriers comprise all of the P41 carriers, and further comprise a part of or all of P42 carriers, wherein
the P42 carriers are carriers on which highest-priority sidelink feedback data of sidelink feedback data other than sidelink feedback data on the P41 carriers in the M4 pieces of sidelink feedback data is located, and P42 is a positive integer.

21. The method according to any one of claims 15 to 17, wherein determining the P5 carriers from the P4 carriers comprises:

determining the P5 carriers from the P4 carriers based on a quantity of pieces of sidelink feedback data that is on each of the P4 carriers and that is of the M4 pieces of sidelink feedback data, wherein
a quantity of pieces of sidelink feedback data that is on any one of the P5 carriers and that is of the M4 pieces of sidelink feedback data is greater than or equal to a quantity of pieces of sidelink feedback data that is on any one of the P4 carriers other than the P5 carriers and that is of the M4 pieces of sidelink feedback data.

22. The method according to any one of claims 15 to 17, wherein determining the P5 carriers from the P4 carriers comprises:

determining the P5 carriers from the P4 carriers based on a channel busy ratio of each of the P4 carriers, wherein a channel busy ratio of any one of the P5 carriers is lower than or equal to a channel busy ratio of any one of the P4 carriers other than the P5 carriers.

23. The method according to any one of claims 15 to 22, wherein sending the M2 pieces of sidelink feedback data of the M41 pieces of sidelink feedback data comprises:

if a sum of preset transmit powers of the M41 pieces of sidelink feedback data is less than or equal to a maximum transmit power of sidelink feedback data that is supported by the first terminal apparatus, sending the M41 pieces of sidelink feedback data, wherein M41 is equal to M2; or
if a sum of preset transmit powers of the M41 pieces of sidelink feedback data is greater than a maximum transmit power of sidelink feedback data that is supported by the first terminal apparatus, sending the M2 pieces of sidelink feedback data of the M41 pieces of sidelink feedback data, wherein M41 is greater than M2, wherein
a preset transmit power of each of the M41 pieces of sidelink feedback data is a preset transmit power corresponding to a carrier on which corresponding sidelink feedback data is located.

24. The method according to claim 23, wherein the M41 pieces of sidelink feedback data are located on P22 carriers, P22 is a positive integer, P5 is greater than or equal to P22, and P22 is greater than or equal to P2;

a preset transmit power corresponding to each of the P22 carriers is a first power corresponding to a corresponding carrier; or
a preset transmit power corresponding to each of the P22 carriers is a maximum value, a minimum value, an average value, or a median value of first powers corresponding to the P22 carriers.

25. The method according to any one of claims 15 to 24, wherein P4 is greater than or equal to the quantity of carriers on which the first terminal apparatus is capable of sending the sidelink feedback data in the first time unit.

26. A communication apparatus, comprising a unit configured to perform the method according to any one of claims 1 to 25.

27. A communication apparatus, comprising a processor, wherein the processor is coupled to a memory, the memory stores a computer program, and the processor is configured to invoke the computer program in the memory, to enable the method according to any one of claims 1 to 25 to be performed.

28. A computer-readable storage medium, wherein the storage medium stores a computer program or instructions; and when the computer program or the instructions are executed by a computer, the method according to any one of claims 1 to 25 is performed.

29. A computer program product, wherein when a computer reads and executes the computer program product, the method according to any one of claims 1 to 25 is performed.

FIG. 1A

FIG. 1B

FIG. 1C

| Bitmap | | | | Bitmap (repetition) | | | | ... | Bitmap (repetition) | | |
|---|---|---|---|---|---|---|---|---|---|---|---|
| Subframe 0 | Subframe 1 | ... | Subframe 7 | Subframe 8 | Subframe 9 | ... | Subframe 15 | Subframe 16 | ... | | Subframe N |

FIG. 2A

Bitmap: 11001110

▦ Subframe used for SL

☐ Normal subframe

Sequence number of a start resource block

Spectrum

Subchannel 1 — $n_{CH}$

Subchannel 2 — $n_{CH}$

...

Subchannel $N$ — $n_{CH}$

**FIG. 2B**

| 0 | 1 | 2 | 3 | 4 | 5 | 6 | 7 | 8 | 9 | 10 | 11 | 12 | 13 |

▨ PSFCH

☐ PSSCH

▦ GAP

▩ AGC

A PSFCH configuration period is 1

A PSFCH configuration period is 2

Resource pool

A PSFCH configuration period is 4

One SL transmission slot

**FIG. 2C**

FIG. 2D

EP 4 750 139 A1

PSFCH

FIG. 2E

FIG. 2F

FIG. 3

S401

A first terminal apparatus receives M1 pieces of sidelink data, where the M1 pieces of sidelink data correspond to M1 pieces of sidelink feedback data

S402

The first terminal apparatus sends M2 pieces of sidelink feedback data of the M1 pieces of sidelink feedback data in a first time unit

FIG. 4

S4021-a

A first terminal apparatus determines P3 carriers from P1 carriers

S4022-a

The first terminal apparatus determines M31 pieces of sidelink feedback data from M3 pieces of sidelink feedback data on the P3 carriers

S4023-a

The first terminal apparatus sends M2 pieces of sidelink feedback data of the M31 pieces of sidelink feedback data in a first time unit

FIG. 5

S4021-b

A first terminal apparatus determines M4 pieces of sidelink feedback data from M1 pieces of sidelink feedback data, where the M4 pieces of sidelink feedback data are located on P4 carriers

S4022-b

The first terminal apparatus determines P5 carriers from the P4 carriers, where M41 pieces of sidelink feedback data of the M4 pieces of sidelink feedback data are located on the P5 carriers

S4023-b

The first terminal apparatus sends M2 pieces of sidelink feedback data of the M41 pieces of sidelink feedback data in a first time unit

FIG. 6

S4021-c

A first terminal apparatus determines a PCC from P1 carriers, where M11 pieces of sidelink feedback data of M1 pieces of sidelink feedback data are located on the PCC

S4022-c

The first terminal apparatus determines M12 pieces of sidelink feedback data from the M11 pieces of sidelink feedback data

S4023-c

The first terminal apparatus sends M2 pieces of sidelink feedback data of the M12 pieces of sidelink feedback data in a first time unit

FIG. 7

S4021-d

A first terminal apparatus determines a PCC from P1 carriers, where M11 pieces of sidelink feedback data of M1 pieces of sidelink feedback data are located on the PCC

S4022-d

The first terminal apparatus determines (P3–1) carriers from (P1–1) SCCs

S4023-d

The first terminal apparatus determines (M31–M11) pieces of sidelink feedback data from (M3–M11) pieces of sidelink feedback data

S4024-d

The first terminal apparatus sends M2 pieces of sidelink feedback data of M31 pieces of sidelink feedback data in a first time unit

## FIG. 8

900

901

Storage unit

902

Processing unit

903

Communication unit

## FIG. 9

Communication apparatus 1000

1001

Processor

Instructions

1003

Memory

Instructions

Transceiver

1002

Radio frequency
circuit

Antenna

**FIG. 10**

**1100**

Processor
1101

Communication
interface
1102

Bus 1105

Memory
1103

Power supply
circuit
1104

**FIG. 11**

## INTERNATIONAL SEARCH REPORT

| International application No. |
|---|
| **PCT/CN2024/103724** |

**A. CLASSIFICATION OF SUBJECT MATTER**

H04W28/02(2009.01)i; H04W72/0453(2023.01)i; H04L1/00(2006.01)i

According to International Patent Classification (IPC) or to both national classification and IPC

**B. FIELDS SEARCHED**

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNTXT; VEN; CNKI; USTXT; EPTXT; WOTXT; ENTXT; CJFD; WFCD; WFCJ: 载波, 侧行, 反馈, 聚合, 车联网, vehicle-to-everything, V2X, carrier aggregation, CA, sidelink, feedback

**C. DOCUMENTS CONSIDERED TO BE RELEVANT**

| Category* | Citation of document, with indication, where appropriate, of the relevant passages | Relevant to claim No. |
|---|---|---|
| A | CN 116436571 A (XI'AN ZIGUANG ZHANRUI TECHNOLOGY CO., LTD.) 14 July 2023 (2023-07-14)<br>description, paragraphs [0083]-[0210], and figures 1-16 | 1-29 |
| A | CN 116489781 A (SPREADTRUM COMMUNICATIONS (SHANGHAI) CO., LTD.) 25 July 2023 (2023-07-25)<br>entire document | 1-29 |
| A | US 2022200737 A1 (QUALCOMM INC.) 23 June 2022 (2022-06-23)<br>entire document | 1-29 |
| A | US 2021006377 A1 (NOKIA TECHNOLOGIES OY) 07 January 2021 (2021-01-07)<br>entire document | 1-29 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 September 2024** | **02 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/103724**

| Patent document cited in search report | | | Publication date (day/month/year) | Patent family member(s) | | | Publication date (day/month/year) |
|---|---|---|---|---|---|---|---|
| CN | 116436571 | A | 14 July 2023 | None | | | |
| CN | 116489781 | A | 25 July 2023 | None | | | |
| US | 2022200737 | A1 | 23 June 2022 | None | | | |
| US | 2021006377 | A1 | 07 January 2021 | US | 11997045 | B2 | 28 May 2024 |

Form PCT/ISA/210 (patent family annex) (July 2022)

**REFERENCES CITED IN THE DESCRIPTION**

**Patent documents cited in the description**

- CN 202311015393